(19)

**Europäisches Patentamt**
**European Patent Office**
**Office européen des brevets**

(11) **EP 4 475 418 A1**

(12) # EUROPEAN PATENT APPLICATION

(43) Date of publication:
**11.12.2024 Bulletin 2024/50**

(21) Application number: **24180456.6**

(22) Date of filing: **06.06.2024**

(51) International Patent Classification (IPC):
**H02M 3/158** (2006.01)

(52) Cooperative Patent Classification (CPC):
**H02M 3/1586; H02M 3/1582**

(84) Designated Contracting States:
**AL AT BE BG CH CY CZ DE DK EE ES FI FR GB
GR HR HU IE IS IT LI LT LU LV MC ME MK MT NL
NO PL PT RO RS SE SI SK SM TR**
Designated Extension States:
**BA**
Designated Validation States:
**GE KH MA MD TN**

(30) Priority: **07.06.2023 US 202363506625 P
25.01.2024 US 202463624917 P**

(71) Applicant: **Solaredge Technologies Ltd.
Herzeliya 4673335 (IL)**

(72) Inventors:
• **GADISH, Yoav Sklut**
  **4673335 Herzeliya (IL)**
• **SAMUHA, Moran**
  **4673335 Herzeliya (IL)**
• **ZIV, Lior**
  **4673335 Herzeliya (IL)**
• **ITZHAK, Asaf**
  **4673335 Herzeliya (IL)**
• **EITAN, Gideon**
  **4673335 Herzeliya (IL)**
• **COHEN, Stephen David**
  **4673335 Herzeliya (IL)**
• **LEVY, Yehuda**
  **4673335 Herzeliya (IL)**

(74) Representative: **V.O.
P.O. Box 87930
2508 DH Den Haag (NL)**

(54) ## POWER CONVERTER

(57) A power converter comprising a shared coupled inductor having windings around a common core, a plurality of buck converters and a boost converter. The plurality of buck converters are coupled between a first terminal and a second terminal. The plurality of buck converters comprises a plurality of buck switching legs and the shared coupled inductor. The boost converter is coupled between a third terminal and a fourth terminal. The boost converter comprises a boost switching leg and the shared coupled inductor.

EP 4 475 418 A1

**Description**

CROSS-REFERENCE TO RELATED APPLICATIONS

This application claims the benefit of U.S. Provisional Application No. 63/506,625 filed on June 7, 2023, and U.S. Provisional Application No. 63/624,917 filed on January 25, 2024. The above referenced applications are hereby incorporated by reference in its entirety.

FIELD OF THE DISCLOSURE

The disclosure relates generally to power converters. More specifically, the disclosure provides descriptions of various devices, apparatus, systems, and methods for implementing power converters.

BACKGROUND OF THE DISCLOSURE

Power converters are used to convert power, generated (e.g., by a power source) at one voltage or current level, to power at a different voltage or current level. There are many types of power converters. One type of power converter can be used to convert direct current (DC) power having a first DC voltage level and a first DC current level, to a second DC voltage level and a second Dc current level (frequently termed a "DC to DC power converter"). Other power converters may also be used to change characteristics of a waveform of the input power. For example, power converters may function as inverters to convert direct current (DC) power to alternating current (AC) power (frequently termed a "DC to AC power converter"), or power converters may function as rectifiers to convert AC power to DC power (frequently termed a "AC to DC power converter"). Power converters may also be used as cycloconverters which convert a frequency of an AC power waveform.

One type of DC to DC power converter includes a buck converter which is configured to control the level of the output voltage and/or the level of the input voltage, such that the level of the output voltage is less than the level of the input voltage. Another type of DC to DC power converter includes a boost converter which is configured to control the level of the output voltage and/or the level of the input voltage, such that the level of the output voltage is higher than the level of the input voltage. An additional category of DC to DC power converter includes a buck-and-boost converter, which is configured to control the level of the output voltage and/or the level of the input voltage, such that the level of the output voltage may be either less than or higher than the level of the input voltage.

Improvements to power converters are disclosed below.

BRIEF SUMMARY OF THE DISCLOSURE

The following presents a simplified summary of the disclosure in order to provide a basic understanding of some aspects of the disclosure. This summary is not an extensive overview of the disclosure. It is not intended to identify key or critical elements of the disclosure or to delineate the scope of the disclosure. The following summary merely presents some concepts of the disclosure in a simplified form as a prelude to the more detailed description provided below.

As explained in more detail below, a first aspect of the disclosure describes a buck-and-boost power converter that converts power from a source and provides the converted power to a load. Additionally, as described, the power converter may be configured to increase or decrease a voltage from the power source. Power converters may include one or more of buck converters and one or more boost converters that share an inductor, according to various aspects of the disclosure. In various aspects of the disclosure the inductor may be a coupled inductor. The buck converters may comprise a buck switching leg. The boost converters may comprise a boost switching leg. Each buck switching leg may be connected to a corresponding winding of the shared coupled inductor.

A second aspect of the disclosure relates to controlling the power converter based on various operational modes. For example, a first operational mode may be a Continuous Current Mode (CCM) in which current may flow through the coupled inductor in both directions. A second, new operational mode is referred herein as Semi-CCM, as further elaborated below, in which current through the coupled inductor may be restricted to flow in one direction at least during a portion of a switching period (e.g., reverse current through the coupled inductor may be restricted). Controlling the power converter in Semi-CCM mode according to aspects of the disclosure herein may reduce the complexity of the control (e.g., one of the switches may be controlled to be in a non-conducting state, and some switches may be controlled in the same manner as in CCM mode). The transition between the two operational modes may be based on measured electrical parameters, such as current through the coupled inductor or voltage across terminals of the power converter.

A third aspect of the disclosure relates to controlling the power converter based on various control modes. For example, a first control mode may be a closed loop control mode and a second control mode may be an open loop control mode. The closed loop control mode may aim to minimize a difference between a reference of an electrical parameter and a measurement of the electrical parameter, such as current through the coupled inductor or voltage across terminals of the power converter. In the open loop control mode, the power converter is controlled based on a computational model. The transition between the control modes may be based on a measurement of the electrical parameter or a different electrical parameter, such as based on voltage across terminals of the power converter). The transition between closed loop control mode and open loop control mode may be based on, for example, the transition between CCM and Semi-CCM.

BRIEF DESCRIPTION OF THE DRAWINGS

A more complete understanding of the present disclosure and the advantages thereof may be acquired by referring to the following description in consideration of the accompanying drawings, in which like reference numbers indicate like features, and wherein:

Figure 1A shows a block diagram depicting an example power converter according to aspects of the disclosure herein.

Figure 1B shows a schematic drawing depicting an example of a power converter according to aspects of the disclosure herein.

Figure 1C shows a block diagram depicting an example power device using a power converter according to aspects of the disclosure herein.

Figure 2A shows waveforms relating to an example power converter operating in a buck-boost conversion mode and the CCM operational mode according to aspects of the disclosure.

Figure 2B shows waveforms relating to an example power converter operating in a buck-boost conversion mode and the DCM operational mode according to aspects of the disclosure.

Figure 3 shows a schematic drawing depicting an example power converter operating as a buck converter in the CCM operational mode.

Figure 4 shows a schematic drawing depicting an example power converter operating as a boost converter in the CCM operational mode.

Figure 5A shows a schematic drawing depicting an example of a power converter operating as a buck-boost converter in the SCCM operational mode.

Figure 5B shows example waveforms relating to the power converter in cases where the power converter operates as a buck-boost converter and in the SCCM operational mode.

Figure 6A shows a schematic drawing depicting an example power converter operating as a buck converter and in the SCCM operational mode.

Figure 6B shows example waveforms relating to the power where the power converter operates as a buck converter and in the SCCM operational mode.

Figure 6C shows example waveforms where the power converter operates as a buck converter and in the SCCM operational mode.

Figure 7 shows a schematic drawing depicting an example of a power converter operating as a boost converter and in the SCCM operational mode.

Figure 8A shows a block diagram depicting an example buck-and-boost converter according to aspects of the disclosure herein.

Figure 8B shows a schematic drawing depicting an example buck-and-boost converter according to aspects of the disclosure herein.

Figure 9A shows a flowchart depicting an example method for transitioning between operational modes.

Figure 9B shows an example of a state machine implementation of various aspects of the disclosure.

Figure 9C shows an example of a state machine implementation of various aspects of the disclosure.

Figure 10A shows a flowchart depicting an example method for transition between control modes, according to various aspects of the disclosure.

Figure 10B shows an example of a state machine implementation according to various aspects of the disclosure.

Figure 11 shows a block diagram depicting an example power converter according to aspects of the disclosure.

Figures 12A and 12B show block diagrams depicting an example power conversion apparatus according to aspects of the disclosure herein.

Figure 13 shows an example power conversion apparatus, where a first converter and a second converter are boost converters.

Figures 14A and 14B show example waveforms related to a power conversion apparatus according to the disclosure herein.

Figure 15 shows an example control loop for controlling a source current, and inductor currents according to the disclosure herein.

DETAILED DESCRIPTION OF THE DISCLOSURE

In the following description of the various embodiments, reference is made to the accompanying drawings, which form a part hereof, and in which is shown by way of illustration various embodiments in which the disclosure may be practiced. It is to be understood that other embodiments may be utilized and structural and functional modifications may be made without departing from the scope of the present disclosure.

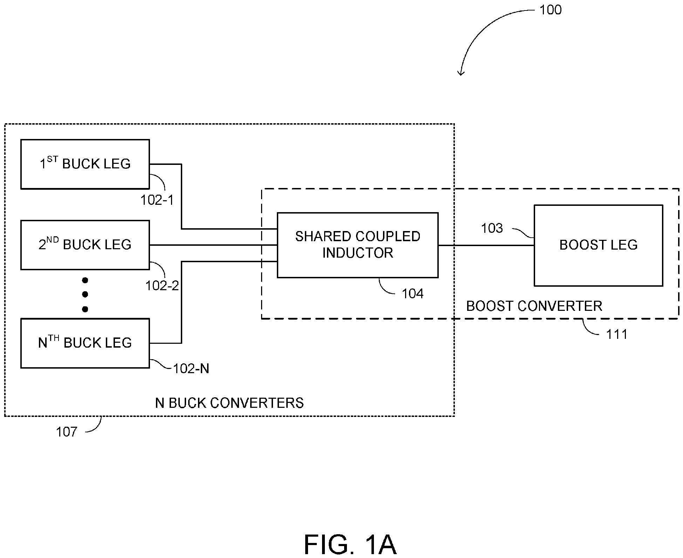

Aspects of the disclosure herein relate to a power converter. As discussed in detail below, the power converter may be configured to convert power from a power source, and provide the converted power to a load. The power converter according to aspects of the disclosure may be a buck-and-boost converter, which may increase or decrease a voltage from the power source. The power converter disclosed herein may comprise a plurality of buck converters and a boost converter, where the plurality of buck converters and the boost converter share a coupled inductor (e.g., as may be shown in Figure 1A). A power converter such as may be shown in Figure 1A, may have increased current ratings (e.g., as may be further elaborated below). Employing a coupled inductor may enable the reduction of the size and the cost of the power converter (e.g., as may further be elaborated below).

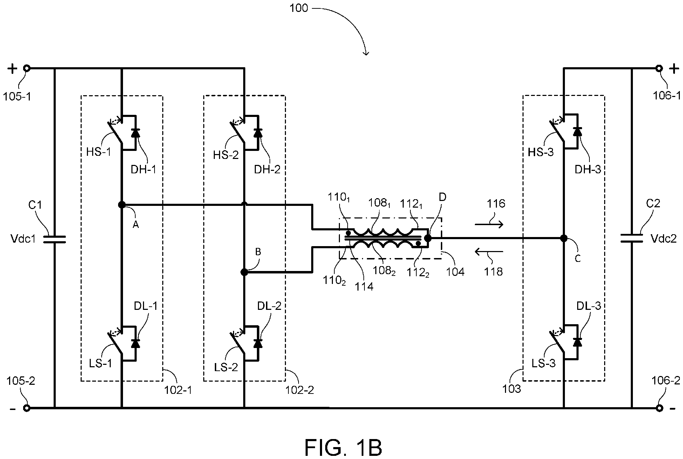

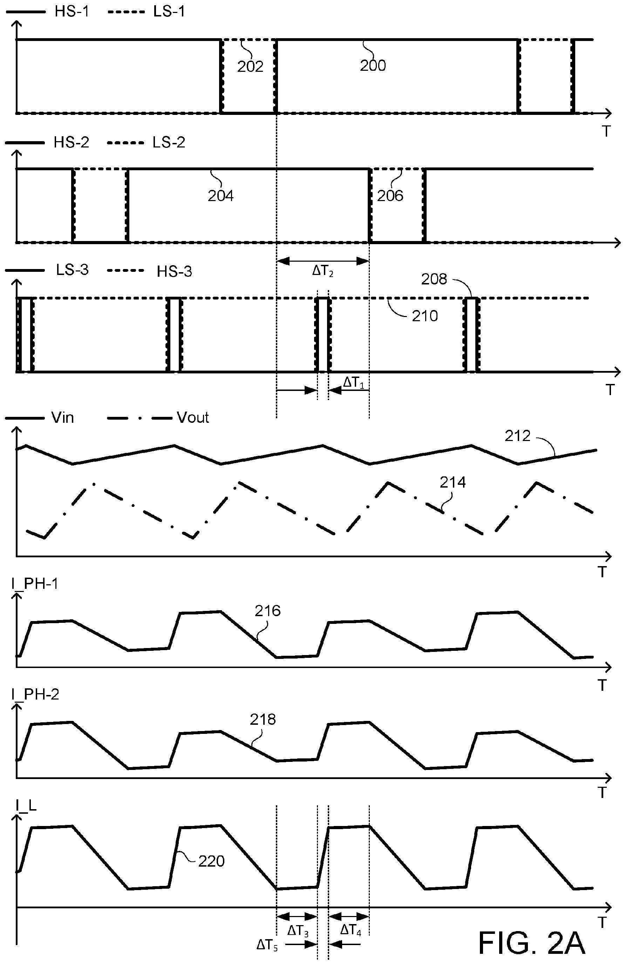

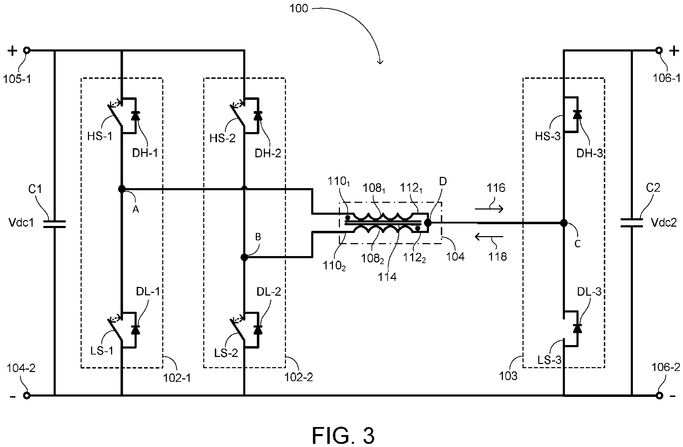

Figure 1A shows a block diagram depicting an example power converter according to various aspects of the disclosure. As described in more detail, below, the example power converter shown in Figure 1A may comprise various switches that may cause the power converter to operate in a number of different modes (e.g., the modes described with respect to Figures 2A-2B, 3. 4. 5A-5B, 6A-6C, 7, 8, 9A-9C, 10A-10B and 11, etc.) to control the conversion of power. In a Continuous Current Mode (CCM), the power converter may operate to allow the current to flow through the coupled inductor in both directions. In the Discontinuous Current Mode (DCM), the power converter may function to restrict the current flow in one direction during a portion of a switching period. DCM may be used to restrict reverse current from flowing through the power converter. The effect of this, as will be explained in more detail below, is to restrict the current through a power device coupled to the converter. However, when a power converter operates in DCM, a problem relating to mutual inductance between the windings of the coupled inductor can arise. Specifically, the mutual inductance between the windings of the coupled inductor (*e.g.*, as shown in Figures. 1A and 1B) may hinder the restriction of reverse current (e.g., since the magnetic field caused by a current in one winding, may induce a current in the outer winding). To address this issue, a new mode of operation may be introduced to reduce the complexity of the control (e.g., relative to the complexity of the control of operating in DCM mode). This new mode of operation is referred to herein as Semi-CCM (SCCM). In SCCM, one of the switches is controlled to be in a non-conducting state while other switches are controlled in the same manner as in CCM mode.

Reference is now made to Figure 1A, which shows a block diagram depicting an example power converter 100 according to aspects of the disclosure herein. Power converter 100 may be a buck and boost converter, and may comprise a plurality of buck converters 107, a boost converter 111 and a shared coupled inductor 104. Plurality of buck converters 107 may comprise a plurality of buck switching legs such as buck legs 102-1, 102-2, ..., 102-N, and shared coupled inductor 104. Boost converter 111 may comprise a boost leg 103 and shared coupled inductor 104. As may further be shown in Figure 1B, shared coupled inductor 104 may comprise a plurality of windings, wound around a common core, where each winding corresponds to a respective buck converter of plurality of buck converters 107.

Reference is made to Figure 1B, which shows a schematic drawing depicting an example of a power converter 100 according to aspects of the disclosure herein. In the example shown in Figure 1B, power converter 100 may comprise a first switching leg 102-1, a second switching leg 102-2, a third switching leg 103, and shared coupled inductor 104. First switching leg 102-1 may be referred to as a "first buck leg", second switching leg 102-2 may be referred to as a "second buck leg", and third switching leg 103 may be referred to as a "boost leg". In power converter 100, first buck leg 102-1 and second buck leg 102-2 may be connected between a first terminal 105-1 and second terminal 105-2 (may commonly be referred to first terminals 105 or upstream terminals 105). Boost leg 103 may be connected between a third terminal 106-1 and fourth terminal 106-2 (may commonly be referred to second terminals 106 or downstream terminals 106). Terminals 105-2 and 106-2 may be connected to each other.

As shown in the example in Figure 1B, the first buck leg 102-1 may comprise a connection point "A", one or more switches, such as switch HS-1, connected between connection point "A" and terminal 105-1, and one or more switches, such as switch LS-1, connected between connection point "A" and terminal 105-2. A connection point (*e.g.*, may also be referred to as node) may be a connection between two or more electrical components (*e.g.*, resistors, transistors, capacitors, inductors, diodes and the like). The example of Figure 1B also shows that second buck leg 102-2 may comprise a connection point "B", one or more switches, such as switch HS-2, connected between connection point "B" and terminal 105-1, and one or more switches, such as switch LS-2, connected between connection point "B" and terminal 105-2. Boost leg 103 may comprise a connection point "C", one or more switches, such as switch HS-3, connected between connection point "C" and terminal 106-1, and one or more switches, such as switch LS-3, connected between connection point "C" and terminal 106-2. Switches HS-1, LS-1, HS-2, LS-2, HS-3, and LS-3 may be implemented as Metal Oxide Semiconductor Field Effect Transistors (MOSFET's), Silicon Carbide (SiC) MOSFET's, Gallium Nitride (GaN) based transistors, Insulated-Gate Bipolar Transistor (IGBT), Bipolar Junction Transistor (BJT), thyristors and the like, to name a few non-limiting examples. In cases in which, first buck leg 102-1, second buck leg 102-2 or boost leg 103 comprise more than one switch, the switches may be connected in parallel to increase the current ratings of first buck leg 102-1, second buck leg 102-2 or boost leg 103. The switches may be connected in series to increase the voltage ratings of first buck leg 102-1, second buck leg 102-2 or boost leg 103. The switches may be connected in a combination of parallel and series connections to increase both the current and the voltage ratings of first buck leg 102-1, second buck leg 102-2 or boost leg 103.

First buck leg 102-1 may comprise diodes, such as diodes DH-1 and DL-1, connected across respective switches. For example, diode DH-1 may be connected across switch HS-1 such that the cathode of diode DH-1 is connected to first terminal 105-1 and the anode of diode DH-1 is connected to first connection point "A". Diode DL-1 may be connected across switch LS-1 such that the cathode of diode DL-1 is connected to first connection point "A", and the anode of diode DL-1 is connected to second terminal 105-2. Second buck leg 102-2 may comprise diodes, such as diodes DH-2 and DL-2, connected across respective switches. For example, diode DH-2 may be connected across switch HS-2 such that the cathode of diode DH-2 is connected to first terminal 105-1 and the anode of diode DH-2 is connected to second connection point "B". Diode DL-2 may be connected across switch LS-2 such that the cathode of diode DL-2 is connected to second connection point "B", and the anode of diode DL-2 is connected to second terminal 105-2. Boost leg 103 may comprise diodes, such as diodes DH-3 and DL-3, connected across respective switches. For example, diode DH-3 may be connected across switch HS-3 such that the cathode of diode DH-3 is connected to third terminal 106-1 and the anode of diode DH-3 is connected to third connection point "C". Diode DL-3 may be connected across switch LS-3 such that the cathode of diode DL-3 is connected to third connection point "C", and the anode of diode DL-3 is connected to fourth terminal 106-2. Diodes DH-1, DL-1, DH-2, DL-2, DH-3, and DL-3 may be body diodes of the corresponding switches HS-1, LS-1, HS-2, LS-2, HS-3, and LS-3.

Coupled inductor 104 may comprise a first winding $108_1$ (which may comprise a first end $110_1$ and a second end $112_1$), which may correspond to first buck leg 102-1. Additionally, coupled inductor 104 may further comprise a second winding $108_2$ (which may comprise a first end $110_2$, and a second end $112_2$), which may correspond to second buck leg 102-2. First winding $108_1$ and second winding $108_2$ may be wound around a common core 114. First winding $108_1$ may be connected between first connection point "A" and a fourth connection point "D" (e.g., the first end $110_1$ of first winding $108_1$ may be connected with first connection point "A" and the second end $112_1$ of first winding $108_1$ may be connected to fourth connection point "D"). Second winding $108_2$ may be connected between second connection point "B" and fourth connection point "D" (e.g., the first end $110_2$ of second winding $108_2$ may be connected with second connection point "B" and the second end $112_2$ of second winding $108_2$ may be connected to fourth connection point "D"). Connection point "D" may be coupled with connection point "C". First winding $108_1$ and second winding $108_2$ may be inversely inductively coupled with each other.

Employing a plurality of buck legs such as buck legs 102-1 and 102-2, coupled across first terminals 105, may enable an increased current rating (e.g., relative to power converters which employ a single buck leg with similar rated switches) of power converter 100 since current from terminals 105 may be divided between first buck legs 102-1 and second buck leg 102-2. Employing a coupled inductor such as coupled inductor 104 may enable a reduction in the size and the cost of the power converter 100 relative to a power converter which employs a plurality of buck legs with separate inductors (e.g., by employing a single core as opposed to a plurality of cores).

In Figure 1B, a current flowing from connection point "D" toward connection point "C" (indicated by arrow 116) may be referred as "positive current" or a "forward current". A current flowing from connection point "C" toward connection point "D" (indicated by arrow 118) may be referred to as a "negative current" or "reverse current". The sum of the current through first winding $108_1$ (e.g., may be referred to as "I_PH-1"), and the current through second winding $108_2$ (e.g., may be referred to as "I_PH-2"), may be referred to herein as "the current through coupled inductor 104" (e.g., I_L = I_PH-1 + I_PH-2). It is noted that the current flowing between connection points "C" and "D" may be the current through coupled inductor 104.

Power converter 100 may increase, decrease, or maintain the voltage between second terminals 106, relative to the voltage between first terminals 105. For example, defining the voltage between first terminals 105 as "$V_{105}$" and the voltage between second terminals 106 as "$V_{106}$", then a conversion ratio "M" may be defined as $V_{106}/V_{105}$ (e.g., M= $V_{106}/V_{105}$). Power converter 100 may convert power such that M < 1 (e.g., power converter decreases the voltage between first terminals 105), M > 1 (e.g., power converter increases the voltage between first terminals 105), or M=1 (e.g., power converter maintains the voltage between first terminals 105).

Employing a plurality of buck legs along with a coupled inductor may reduce the inductor ripple current relative to the inductor ripple current of a single buck converter, and the voltage between first terminals 105. In some cases, the output current of a boost converter may be lower than the input current. Thus, the current ratings requirements of the boost leg may be less than the current ratings requirements of the buck legs. In some cases, a single boost leg may be sufficient for the power converter requirements. Employing a single boost leg may save cost, size, anchor space, and may simplify the control of the power converter (e.g., compared to a power converter employing a plurality of buck legs and a plurality of boost legs).

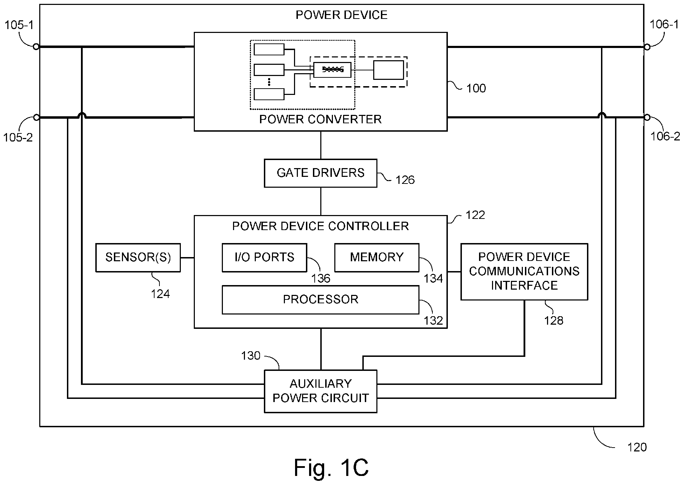

A power converter such as power converter 100 may be used in a power device, which may be used to control a transfer of power, for example, from a power source (e.g., a photovoltaic panel, a battery, a fuel cell, and the like) to a load. Reference is made to Figure 1C which shows a block diagram depicting an example power device 120 using a power converter according to aspects of the disclosure herein. Power device 120 may use a power converter such as power converter 100. Power device 120 may comprise power converter 100, first terminal 105-1, second terminal 105-2, third terminal 106-1, and fourth terminal 106-2. Power device 120 may comprise a power device controller 122 and sensor(s) 124. Power device 120 may further comprise gate drivers 126, a power device communications interface 128, and an auxiliary power circuit 130.

Power device controller 122 may be partially or fully implemented as one or more computing devices or may include one or more processors, such as an Application Specific Integrated Circuit (ASIC) controller, Field Programmable Gate Array (FPGA) controller, a microcontroller, or a multipurpose computer, to name a few non-limiting examples. Power device controller 122 may comprise one or more processors 132, connected to memory 134 and Input/Output (I/O) ports 136. Memory 134 may store computer readable instructions as well as data (e.g., measurements from sensor(s) 124 or parameters). I/O ports 136 may be configured to connect modules (e.g., sensor(s) 124, communication interface 128, gate drivers 126, or other modules of power device 120) to processor 132. The one or more processors 132 may execute the instructions, which may result in the processor 132 performing one or more steps or functions as described herein that are attributed to one or both of power device controller 122 and processor 132.

Sensor(s) 124 may comprise one or more voltage sensors (e.g., implemented by employing a resistive or capacitive divider, a resistive or capacitive bridge, or comparators), one or more current sensors (e.g., implemented by employing a Current Transformer (CT) sensor, a Hall Effect sensor, or a zero flux sensor, current sense resistors, and the like), one or more temperature sensors, or one or more frequency sensors. Sensor(s) 124 may be placed in various positions in power converter 100, to measure electrical parameters (e.g., voltage or current) relating to power converter 100, and used by power device controller 122 for controlling power converter 100. For example, a voltage sensor may be placed between first terminal 105-1 and second terminal 105-2 for measuring the voltage between first terminals 105. A voltage sensor may be placed between third terminal 106-1 and fourth terminal 106-2 for measuring the voltage between second terminals 106. A current sensor may be placed between connection point "D" and connection point "C" for measuring the current level relating to the current flowing through coupled inductor 104 (shown in Figures 1A & 1B). A current sensor may be placed at the connection between LS-2 and LS-3 for measuring a current level relating to the current flowing through coupled inductor 104. A current sensor may be placed at one or more of terminals 105-1, 105-2 for measuring a level of the current flowing therethrough (e.g., an input current into power converter 100). A current sensor may be placed at one or more of terminals 106-1, 106-2 for measuring a level of the current flowing therethrough (e.g., an output current from power converter 100).

Communications interface 128 may include one or more of a receiver, a transmitter, or a transceiver, and may be configured to communicate, based on a communications protocol, signals with one or more other transmitters, receivers or transceivers, over a medium. The communication protocol may define one or more characteristics of the signals and/or of communications using signals, such as a transmission frequency or frequencies, a modulation scheme (e.g., Amplitude shift keying - ASK, Frequency shift keying - FSK, Quadrature Phase Shift Keying - QPSK, Quadrature Amplitude Modulation - QAM, ON OFF keying - OOK), multiple access scheme (e.g., Time Division Multiple Access - TDMA, Frequency Division Multiple Access - FDMA, Code Division Multiple Access - CDMA, Carrier Sense Multiple Access - CSMA, Aloha), encoding/decoding schemes (e.g., Non Return to Zero - NRZ, Manchester coding, Block coding), or any other characteristic. The medium may be a wired or a wireless medium. For example, a wired medium may be a dedicated communications cable (e.g., twisted pair, coaxial cable) or power lines connecting power device 120 to a load or other power devices.

Power device controller 122 may control power converter 100 (e.g., via gate drivers 126) in various conversion mode and operational modes using various control modes. Power device controller 122 may control power converter 100 to operate in one of a buck conversion mode (e.g., power converter 100 operates as a buck converter), a boost conversion mode (e.g., power converter 100 operates as a boost converter), or a buck-boost conversion mode (e.g., power converter 100 operates as a buck-boost converter). In each of the conversion modes, power device controller 122 may control power converter 100 to operate in one of two operational modes. The first operational mode may be a Continuous Current Mode (CCM) and the second operational mode may be a semi-Continuous Current Mode (SCCM). SCCM may restrict the current through coupled inductor 104 (e.g., the current between connection points "D" and "C") to be non-negative. Power device controller 122 may control power converter 100 in one of two control modes. The first control mode may be a closed loop control mode and the second control mode may be an open loop control mode.

In any one of the conversion modes, operation modes, or control modes, power device controller 122 may generate control signals for controlling one or more of first buck leg 102-1, second buck leg 102-2, or boost leg 103 as may further be described below. Controlling first buck leg 102-1, second buck leg 102-2, and boost leg 103 may comprise controlling switches HS-1, LS-1, HS-2, LS-2, HS-3, and LS-3 to be in a conducting station, a non-conducting state, or to alternate between a conducting state and a non-conducting. Power device controller 122 may control switches HS-1, LS-1, HS-2, LS-2, HS-3 or LS-3 to alternate between a conducting state to a non-conducting state, by generating a Pulse Width Modulation (PWM) signal or signals. For example, power device controller 122 may generate a first PWM signal for controlling first buck leg 102-1 and a second PWM signal for controlling second buck leg 102-2. According to some embodiments of the disclosure herein, the first PWM signal and the second PWM signal may have the same phase, one with respect to the other. According to some embodiments of the disclosure herein, the second PWM signal may be phase shifted with respect to the first PWM signal. According to some examples in the disclosure herein, the second PWM signal may be phase shifted by 180 degrees with respect to the first PWM signal. According to some examples where more than two buck legs 102-1, 102-2, ..., 102-N are used by power converter 100, the phase shift between the PWM signals corresponding to buck legs 102-1, 102-2, ..., 102-N may be determined as follows:

$$\Delta\phi_i = i * \frac{360}{N} \; for \; i \in \{1, 2, ..., N - 1\} \hspace{2cm} (1)$$

wherein N is the number of buck converters 102-1, 102-2, ..., 102-N.

In some examples in the disclosure herein, the voltage 'Vdc1' between first terminals 105 may be referred to as an "input voltage" and the voltage 'Vdc2' between second terminals 106 may be referred to as an "output voltage". However, this should not be considered as limiting. According to aspects of the disclosure herein, power device controller 122 may control power converter 100 to convert power from second terminals 106 to first terminals 105 as well.

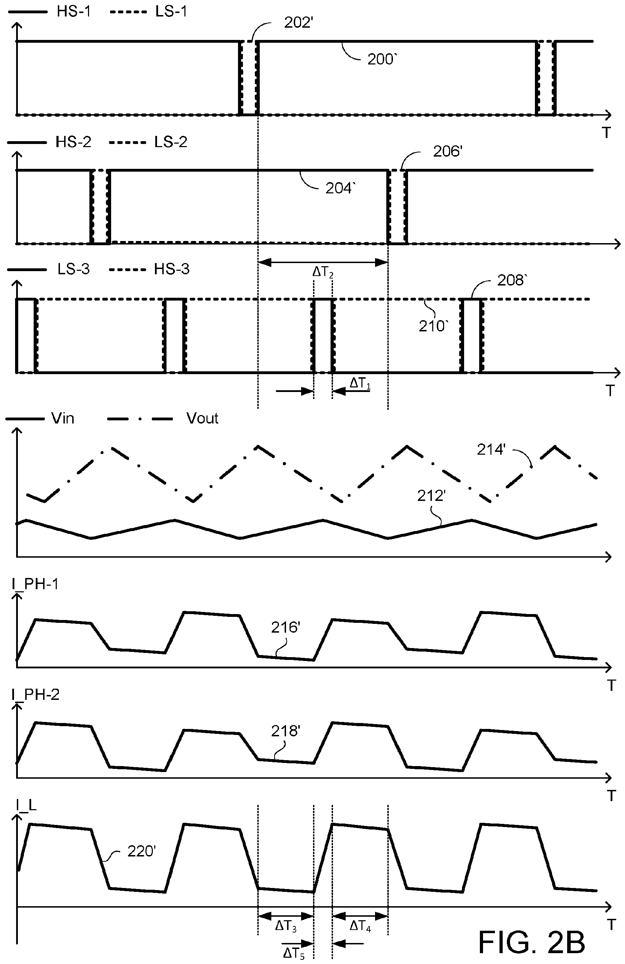

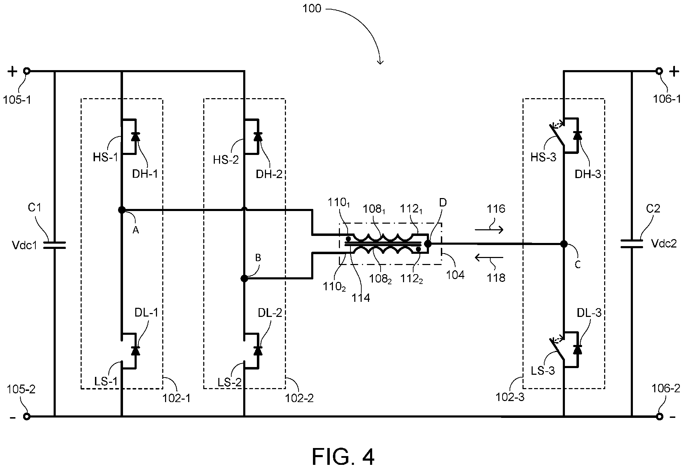

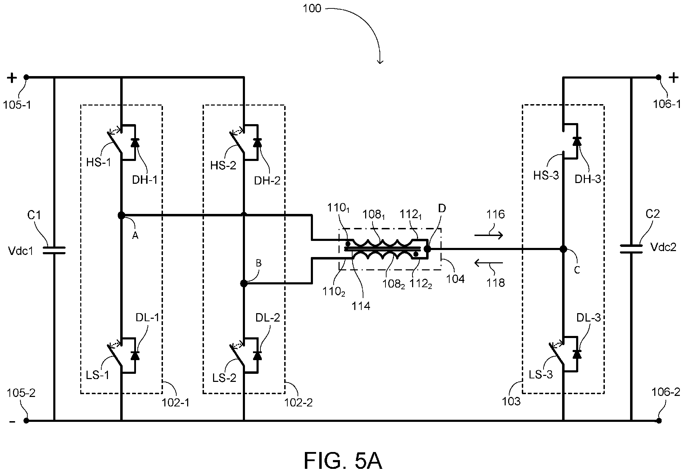

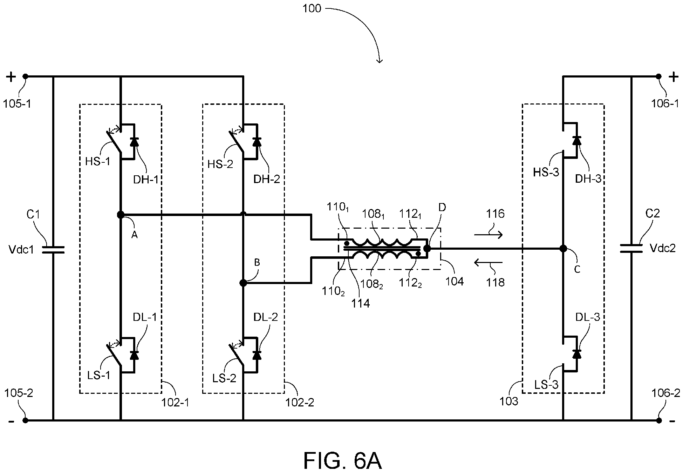

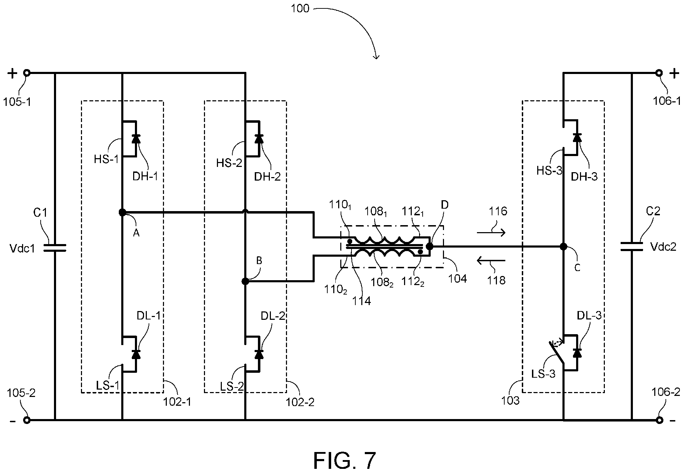

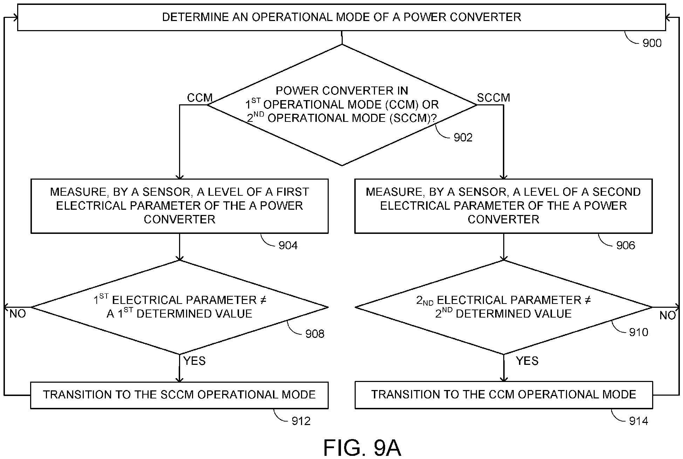

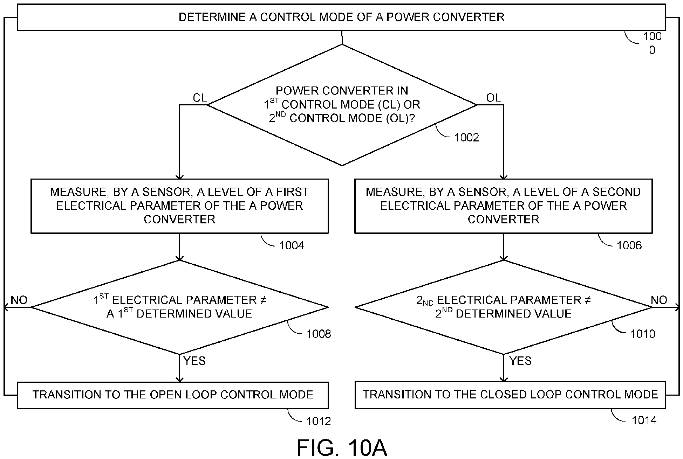

As mentioned above, power device controller 122 may control power converter 100 to operate at various conversion, operational, or control modes. Controlling power converter 100 to operation in CCM as a buck-boost converter may further be described in conjunction with Figures 2A and 2B. Controlling power converter 100 to operate in CCM as a buck converter may further be described in conjunction with Figure 3. Controlling power converter 100 to operate in CCM as a boost converter may further be described in conjunction with Figure 4. Controlling power converter 100 to operate in SCCM as a buck-boost converter may further be described in conjunction with Figures 5A-5B. Controlling power converter 100 to operate in SCCM as a buck converter may further be described in conjunction with Figures 6A-6C. Controlling power converter 100 to operate in SCCM as a boost converter may further be described in conjunction with Figure 7. Transitioning between operational modes may further be described in conjunction with Figures 9A-9C. Transitioning between control modes may further be described in conjunction with Figures 10A-10B.

According to aspects of the disclosure herein, power device controller may control power converter 100 to operate in a buck-boost conversion mode and in CCM operational mode, where M may be smaller, larger or equal to 1. In cases in which power device controller 122 may control power converter 100 to operate as a buck-boost converter, power device controller 122 may generate three PWM signals (and the complementary of each or the three PWM signals). A first PWM signal may be used to control first buck leg 102-1 (e.g., control switch HS-1 and LS-1 to transition between a conducting state and a non-conducting state in a complementary manner). A second PWM signal may be used to control second buck leg 102-2 (e.g., control switch HS-2 and LS-2 to transition between a conducting state and a non-conducting state in a complementary manner). A third PWM signal may be used to control boost leg 103 (e.g., control switch HS-3, LS-3, or both to transition between a conducting state and a non-conducting state in a complementary manner). The second PWM signal may be shifted by 180 degrees relative to the first PWM signal. The frequency of the third PWM signal may be twice the frequency of the first PWM signal or the second PWM signal.

Reference is now made to Figures 2A and 2B, which show examples of waveforms relating to power converter 100. Figure 2A shows waveforms relating to an example power converter operating in a buck-boost conversion mode and the CCM operational mode when M > 1, according to aspects of the disclosure. Figure 2B shows waveforms relating to an example power converter operating in a buck-boost conversion mode, and the CCM operational mode when M < 1, according to aspects of the disclosure. Waveforms 200 (Figure 2A) and 200' (Figure 2B) show the first PWM signal, for controlling switch HS-1 in first buck leg 102-1. Waveforms 202 (Figure 2A) and 202' (Figure 2B) show the complementary of first PWM signal, for controlling switch LS-1 in first buck leg 102-1. Waveforms 204 (Figure 2A) and 204' (Figure 2B) show the second PWM signal, for controlling switch HS-2 in second buck leg 102-2. Waveforms 206 (Figure 2A) and 206' (Figure 2B) show the complementary of second PWM signal, for controlling switch LS-2 in second buck leg 102-1. Waveforms 208 (Figure 2A) and 208' (Figure 2B) show the third PWM signal for controlling LS-3 in boost leg 103. Waveforms 210 (Figure 2A) and 210' (Figure 2B) show the complementary of the third PWM signal, for controlling switch HS-3 in boost leg 103. Waveforms 212 (Figure 2A) and 212' (Figure 2B) show an input voltage 'Vin' between first terminals 105. Waveforms 214 (Figure 2A) and 214' (Figure 2B) show an output voltage 'Vout' between second terminals 106. Waveforms 216 (Figure 2A) and 216' (Figure 2B) show a current through first winding $108_1$ of coupled inductor 104 (I_PH-1). Waveforms 218 (Figure 2A) and 218' (Figure 2B) show a current through second winding $108_2$ of coupled inductor 104 (I_PH-2). Waveforms 220 (Figure 2A) and 220' (Figure 2B) show a sum of the currents through first winding $108_1$ and second winding $108_2$ (the current through coupled inductor 104, I_L). In cases where M < 1, such as may be shown in Figure 2A, the level of Vout may be smaller than the level of Vin. In cases where M > 1, such as may be shown in Figure 2A, the level of Vout may be larger than the level of Vin.

As shown in Figures 2A and 2B, power device controller 122 may generate the second PWM signals 204 and 204' in a 180 degrees phase shift relative to the first PWM signals 200 200'. The frequency of the third PWM signals 208 and 208' may be twice the frequency of the first PWM signals 200 and 200' or the second PWM signal 204 or 204'. Power device controller 122 may use the first PWM signal 200 or 200' to control switch HS-1, and the complementary first PWM signal 202 or 202' to control switch LS-1, to alternate between the conducting state and the non-conducting state (e.g., switches HS-1 and LS-1 switch in a complementary manner). Power device controller 122 may use the second PWM signal 204 or 204' to control the switch HS-2, and the complementary second PWM signal 206 or 206' to control switch LS-2, to alternate between the conducting state and the non-conducting state (e.g., switches HS-2 and LS-2 switch in a complementary manner). Power device controller 122 may use the third PWM signal to control switch HS-3, and the complementary third PWM signal 210 or 210' to control switch LS-3 to alternate between the conducting state and the non-conducting state (e.g., switches HS-2 and LS-2 switch in a complementary manner). It is noted that the term 'complementary manner" herein, relates to the states of two switches. For example, when one switch is in a conducting state, the other switch is in a non-conducting state, and vice versa. Complementary PWM signals relate to the levels of the two PWM signals. For example, when first PWM signal 202 is at a 'High' level, the complementary signal is at a 'Low' level, and vice versa. The same applies mutatis mutandis to the second and third PWM signals.

Power device controller 122 may generate the third PWM signals 208 and 208' to control switch LS-3 to transition from the non-conducting state to the conducting state such that the middle of an interval, $\Delta T_1$, in which the switch LS-3 is in a conducting state (e.g., third PWM signals 208 or 208' are high), is at a middle of an interval $\Delta T_2$ in which switch HS-1 and switch HS-2 are in a conducting state (e.g., first PWM signals 200 or 200' and second PWM signal 204 or 200' are both high). This results in two intervals, $\Delta T_3$, and $\Delta T_4$, of substantially equal duration, in which the sum of the currents through first winding $108_1$ and second winding $108_2$, as may be shown by waveform 220 or 220', has substantially equal slopes. Time intervals $\Delta T_3$, and $\Delta T_4$ provide sufficient times for current measurements with reduced sensitivity (e.g., due to the slope of the inductor current, I_L, $\Delta T_3$, and $\Delta T_4$, relative to the slope of the inductor current, I_L, at $\Delta T_5$).

According to aspects of the disclosure herein, power device controller 122 may control power converter 100 to operate in a buck conversion mode and in the CCM operational mode. Reference is now made to Figure 3, which shows a schematic drawing depicting an example power converter 100 in cases in which power device controller 122 may control power converter 100 to operate as a buck converter and in CCM (e.g., power device controller 122 may control power converter 100 to operate in a buck conversion mode and the CCM operational mode). In the buck conversion mode, switch HS-3 of the third leg 103 may be maintained in the conducting state and switch LS-3 of the third leg 103 may be maintained in the non-conducting state.

In the CCM operational mode and the buck conversion mode, power device controller 122 may generate a first PWM signal and a second PWM signal. power device controller 122 may control first buck leg 102-1 using a first PWM signal (and the complementary thereof) and control second buck leg 102-2 using a second PWM signal (and the complementary thereof). Power device controller 122 may generate the first PWM signal and the second PWM signal such that the phase of the second PWM signal is shifted by 180 degrees relative to the first PWM signal. Power device controller 122 may use the first PWM signal to control switch HS-1, and the complementary of first PWM signal to control switch LS-1, such that switch HS-1 and switch LS-1 alternate between the conducting state and the non-conducting state in a complementary manner. Power device controller 122 may use the second PWM signal to control switch HS-2, and the complementary second PWM signal to control switch LS-2, such that switch HS-2 and switch LS-2 alternate between the conducting state and the non-conducting state in a complementary manner.

According to aspects of the disclosure herein power device controller 122 may control power converter 100 to operate in a boost conversion mode and in the CCM operational mode. Reference is now made to Figure 4. which shows a schematic drawing depicting an example power converter 100 in cases in which power device controller 122 may control power converter 100 to operate as a boost converter and in CCM (e.g., power device controller 122 may control power converter 100 to operate in a boost conversion mode and the SCCM operational mode). In the CCM operational mode and the boost conversion mode, power device controller 122 may control switch HS-1 and switch HS-2 to be in a conducting state. Power device controller 122 may control switch LS-1 and switch LS-2 to be in a non-conducting state. In the CCM operational mode and the boost conversion mode, power device controller 122 may generate a first PWM signal and use the first PWM signal to control switch HS-3, and the complementary of first PWM signal to control switch LS-3, such that switch HS-3 and switch LS-3 alternate between the conducting state and the non-conducting state in a complementary manner.

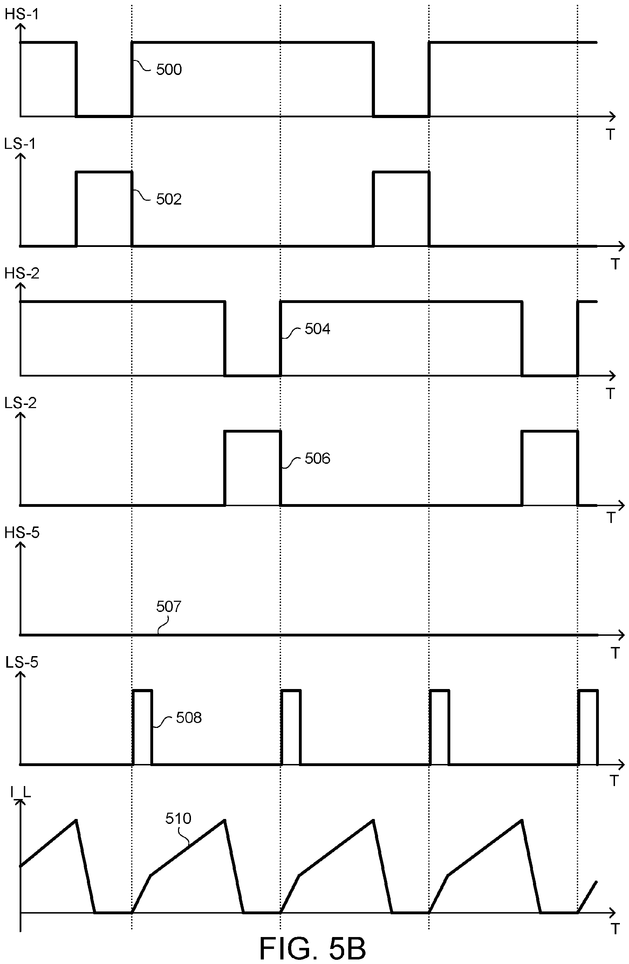

According to aspects of the disclosure herein power device controller 122 may control power converter 100 to operate in a buck-boost conversion mode and in the SCCM operational mode. In SCCM the high side switch or switches of the boost leg are maintained in a non-conducting state. Reference is now made to Figures 5A and 5B. Figure 5A shows a schematic drawing depicting an example of a power converter operating as a buck-boost converter in the SCCM operational mode. Figure 5B shows example waveforms relating to the power converter in cases where the power converter operates as a buck-boost converter and in the SCCM operational mode. Figure 5A shows power converter 100, and Figure 5B shows waveforms relating to power converter 100, for example, in cases in which power device controller 122 may control power converter 100 to operate as a buck-boost converter and in SCCM (e.g., power device controller 122 may control power converter 100 to operate in a buck-boost conversion mode and the SCCM operational mode). Figure 5B may relate to cases in which the duty cycle "D" of the PWM signals controlling first buck leg 102-1 and the second buck leg 102-2 may be larger than 50% (e.g., D > 0.5). As may be shown in Figure 5A, power device controller 122 may control switch HS-3 to be in a non-conducting state.

With reference to Figure 5B, waveform 500 shows the first PWM signal for controlling switch HS-1 in first buck leg 102-1. Waveform 502 shows the complementary first PWM signal for controlling switch LS-1 in firs buck leg 102-1. Waveform 504 shows the second PWM signal for controlling switch HS-2 in second buck leg 102-2, and waveform 506 (Figure 5A) shows the complementary of second PWM signal for controlling switch LS-2 in second buck leg 102-2. Wave from 507 shows a control signal for controlling switch HS-3 of boost leg 103 (switch HS-2 may be maintained in a non-conducting state). Waveform 508 shows the third PWM signal for controlling LS-3 in boost leg 103. Waveforms 510 shows a current through coupled inductor 104 (I_L). As can be seen in Figure 5B, the current through coupled inductor 104 may be non-negative (e.g., no current flows from connection point "C" to connection point "D").

As shown in Figures 5B, power device controller 122 may generate the second PWM signals 504 in a 180 degrees phase shift relative to the first PWM signals 500. Using 180 degrees phase shifted PWM signals for first buck leg 102-1 and second buck leg 102-2 may reduce the ripple of the current through coupled inductor 104. The frequency of the third PWM signals 508 may be twice the frequency of the first PWM signal 500 or the second PWM signal 504. Power device controller 122 may use the first PWM signal 500 to control switch HS-1, and the complementary first PWM signal 502 to control switch LS-1, such that switch HS-1 and switch LS-1 alternate between the conducting state and the non-conducting state. Power device controller 122 may use the second PWM signals 504 to control switch HS-2, and the complementary second PWM signal 506 to control switch LS-2, such that switch HS-2 and switch LS-2 alternate between the conducting state and the non-conducting state. Power device controller 122 may use control signal 507 to control switch HS-3 to be in a non-conducting state. Power device controller 122 may use the third PWM signal 508 to control switch LS-3 to alternate between the conducting state and the non-conducting state. Power device controller 122 may generate the third PWM signal switch LS-3 to transition from the non-conducting state to the conducting state at the time in which switch HS-1, and at the time in which switch HS-2 transition from the non-conducting state to the conducting state. In the buck-boost conversion mode and SCCM operational mode, first buck leg 102-1 and second buck leg 102-2, as well as switch LS-3 in boost leg 103 may be controlled in the same manner as in the buck-boost conversion mode and CCM operational mode.

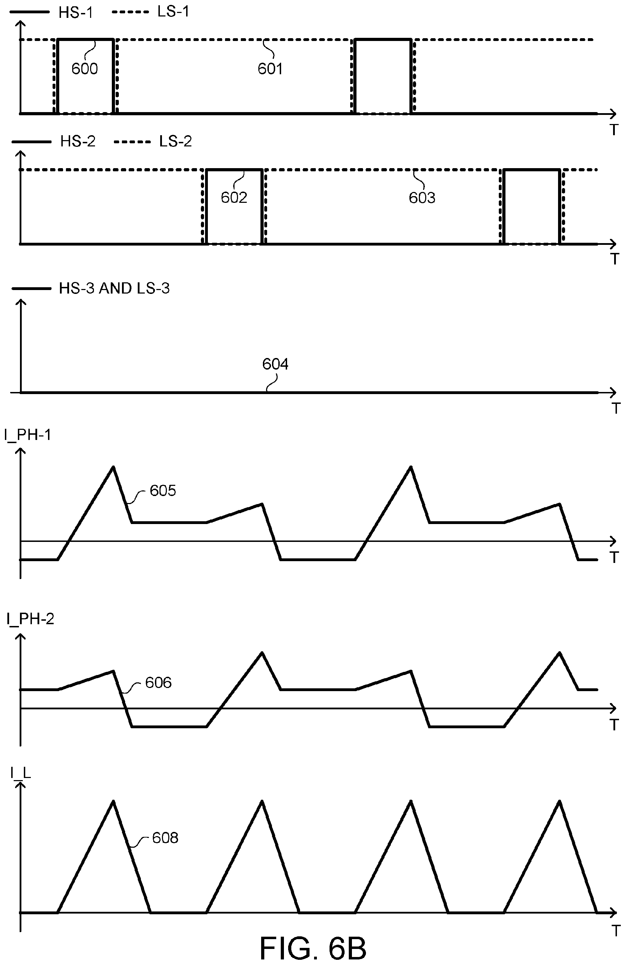

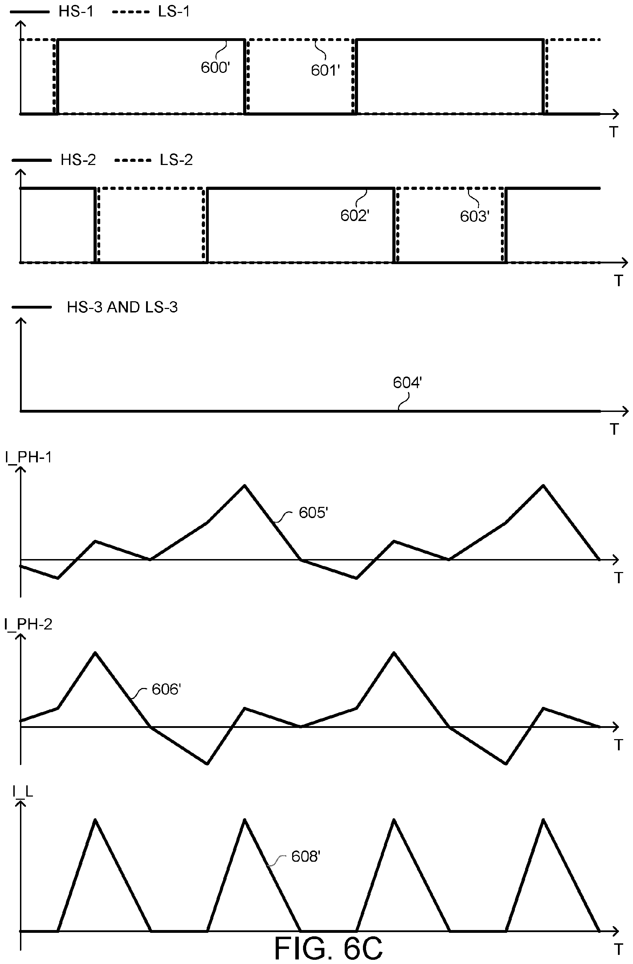

According to aspects of the disclosure, power device controller 122 may control power converter 100 to operate in a buck conversion mode and in the SCCM operational mode. In SCCM, power device controller 122 controls switch HS-3 to be in a non-conducting state. Reference is now made to Figures 6A, 6B and 6C. Figure 6A shows a schematic drawing depicting an example power converter operating as a buck converter and in the SCCM operational mode. Figure 6B shows example waveforms relating to the power where the power converter operates as a buck converter and in the SCCM operational mode. Figure 6C shows example waveforms where the power converter operates as a buck converter and in the SCCM operational mode. Figure 6A shows power converter 100, and Figures 6B and 6C shows waveforms relating power converter 100, for example, in cases in which power device controller 122 may control power converter 100 to operate as a buck converter and in SCCM (e.g., power device controller 122 may control power converter 100 to operate in a buck conversion mode and the SCCM operational mode). Figures 6B shows waveforms in cases in which the duty cycle of the first PWM signal and the second PWM signal are lower than 50% (e.g., D < 0.5, where 'D' relates to the duty cycle). Figures 6C shows waveforms in cases in which the duty cycle of the first PWM signal and the second PWM signal are higher than 50% (e.g., C > 0.5).

In the SCCM operational mode and the buck conversion mode, power device controller 122 controls switch HS-3 and switch LS-3 to be in a non-conducting state. In the SCCM operational mode and the buck conversion mode (and similar to the CCM operational mode and buck conversion mode described above), power device controller 122 may generate a first PWM signal, the complementary of the first PWM signal, a second PWM signal, and the complementary of the second PWM signal. Power device controller 122 may also control first buck leg 102-1 using a first PWM signal and control second buck leg 102-2 using a second PWM signal. Power device controller 122 may generate the first PWM signal and the second PWM signal such that the second PWM signals in a 180 degrees phase shift relative to the first PWM signals. Power device controller 122 may use the first PWM signal to control switch HS-1, and the complementary of first PWM signal to control switch LS-1, such that switch HS-1 and switch LS-1 alternate between the conducting state and the non-conducting state in a complementary manner. Power device controller 122 may use the second PWM signal to control switch HS-2, and the complementary second PWM signal to control switch LS-2, such that switch HS-2 and switch LS-2 alternate between the conducting state and the non-conducting state in a complementary manner.

Figure 6B shows waveforms when D < 0.5 and Figure 6C show waveforms when D > 0.5. Waveforms 600 (Figure 6B) and 600' (Figure 6C) show the first PWM signal for controlling switch HS-1 in first buck leg 102-1, and waveforms 601 (Figure 6B) and 601' (Figure 6C) show the complementary first PWM signal for controlling switch LS-1 in first back leg 102-1 (e.g., switch HS-1 and LS-1 may be controlled to switch in a complementary manner). Waveforms 602 (Figure 6B) and 602' (Figure 6C) show the second PWM signal for controlling switch HS-2 in switching leg 102-2, and waveforms 603 (Figure 6B) and 603' (Figure 6C) show the complementary second PWM signal for controlling switch LS-2 inf second buck leg 102-2 (e.g., switch HS-2 and LS-2 may be controlled to switch in a complementary manner). Waveforms 604 (Figure 6B) and 604' (Figure 6C) show the control signal for controlling HS-3 and LS-3 of boost leg 103. Waveforms 605 (Figure 6B) and 605' (Figure 6C) show a current (I PH-1) through first winding $108_1$ of coupled inductor 104. Waveforms 606 (Figure 6B) and 606' (Figure 6C) show a current (I PH-2) through second winding $108_2$ of coupled inductor 104. Waveforms 608 (Figure 6B) and 608' (Figure 6C) show a sum of the currents through first winding $108_1$ and second winding $108_2$ (e.g., the current through coupled inductor 104, I_L). As shown in Figures 6B and 6C, power device controller 122 may generate the second PWM signals 602 and 602' in a 180 degrees phase shift relative to the first PWM signals 600 and 600'.

As can be seen in Figure 6A, diode DH-3 restricts the current flow from terminal 106-1 to connection point C, and in Figures 6B and 6C, waveforms 608 and 608' show that a current through coupled inductor 104 (e.g., the sum of the currents through first winding $108_1$ and second winding $108_2$) does not reduce below zero. Diode DH-3 may restrict the flow of reverse current through coupled inductor 104. As can be seen in Figure 6B, in the SCCM operational mode and the buck conversion mode, the current through coupled inductor may not reduce below zero. In the buck conversion mode and in the SCCM operational mode, first buck leg 102-1, second buck leg 102-2 and switch LS-3 in boost leg 103 may be controlled in the same manner as in buck conversion mode and in the CCM operational mode.

According to aspects of the disclosure herein power device controller 122 may control power converter 100 to operate in a boost conversion mode and in the SCCM operational mode. In SCCM, power device controller 122 controls switch HS-3 to be in a non-conducting state. Reference is now made to Figure 7 which shows power converter 100 in cases in which power device controller 122 may control power converter 100 to operate as a boost converter and in SCCM (e.g., power device controller 122 may control power converter 100 to operate in a boost conversion mode and the SCCM operational mode). In the SCCM operational mode and the boost conversion mode, power device controller 122 may control switch HS-1 and switch HS-2 to be in a conducting state. Power device controller 122 may control switch LS-1 and switch LS-2 to be in a non-conducting state. In the CCM operational mode and the boost conversion mode, power device controller 122 may generate a first PWM signal and use the first PWM signal to control switch LS-3, to alternate between the conducting state and the non-conducting state. In SCCM boost mode, first buck leg 102-1, second buck leg 102-2 and switch LS-3 in boost leg 103 may be controlled in the same manner as in CCM.

Figures 5A-5B, 6A-6C and 7 show power converter 100 operating in SCCM and waveforms relating to the operation of power converter 100 when operating in SCCM. In cases in which power converter operates only in SCCM, switch HS-3 may be replaced with a diode. Such a diode may be implemented as a discrete component or as an ideal diode (e.g., using ideal diode integrated circuits such as LTC4451 or LM73100, or using discrete components).

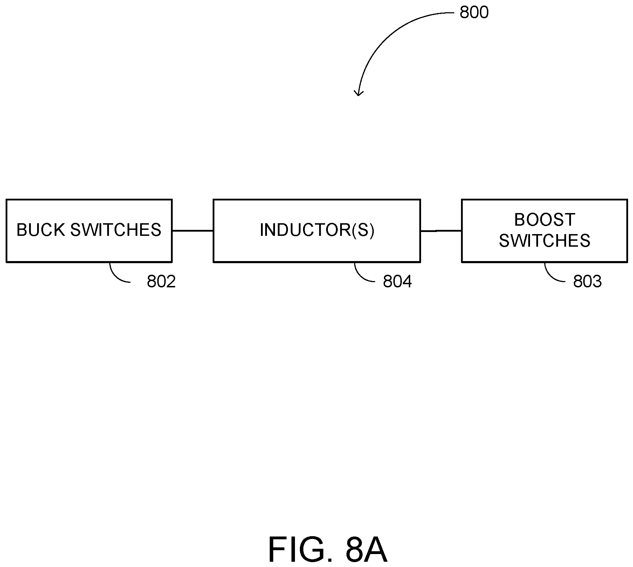

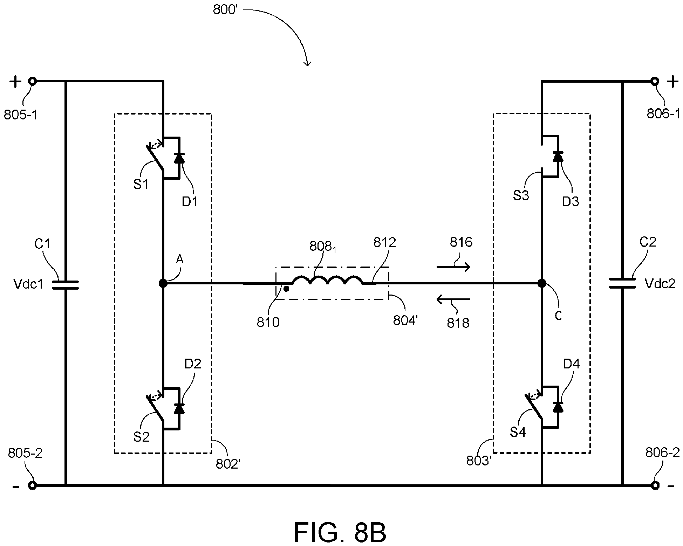

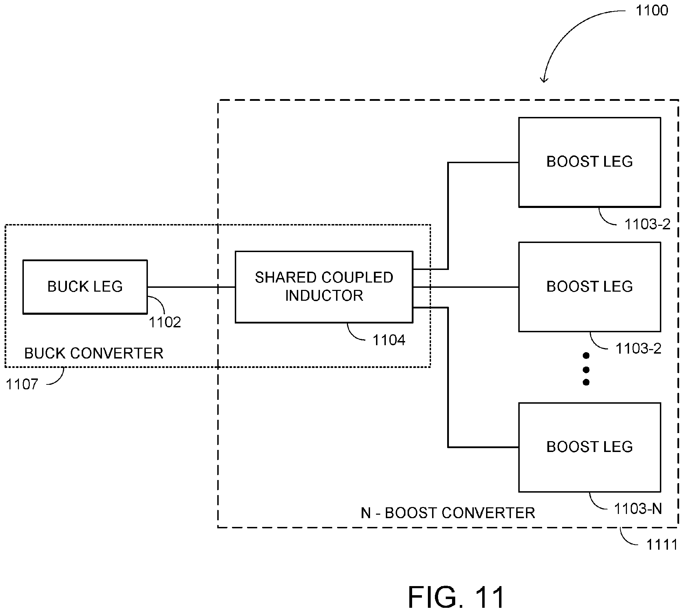

According to aspects of the disclosure herein, the SCCM operational mode may be applied to buck-and-boost converters in general. In such configurations, power device controller 122 may control the high side switch of the boost leg or legs to be in a non-conducting state. Reference is now made to Figure 8A, which shows a block diagram depicting an example buck-and-boost converter 800. Buck-and-boost converter 800 may comprise inductor(s) 804, coupled between buck switches 802 and boost switches 803. Buck switches 802 may comprise one or more buck legs (e.g., buck leg 802' as may be shown in Figure 8B, or multiple buck legs 102-1, 102-2, ..., 102-N as may be shown in Figure 1A or 1B). Boost switches 804 may comprise one or more boost legs (e.g., boost leg 803' as may be shown in Figure 8B, or multiple boost legs 1103-1, 1103-2, ..., 1103-N as may be described in Figure 11). Inductor(s) 804 may be a single inductor (e.g., as may be shown in Figure 8B) or multiple inductors (e.g., as may be shown in Figure 1B). In cases in which inductor(s) 804 comprise multiple inductors, the multiple inductors may be coupled inductors or non-coupled inductors.

Reference is made to Figure 8B, which shows a schematic drawing depicting an example of buck-and-boost converter 800'. Buck-and-boost converter 800' may use a single buck leg 802', a single boost leg 803 and an inductor 804'. In power converter 800', buck leg 802' may be connected between a first terminal 805-1 and second terminal 805-2 (may commonly be referred to first terminals 805 or upstream terminals 805). Boost leg 803' may be connected between a third terminal 806-1 and fourth terminal 806-2 (may commonly be referred to second terminals 806 or downstream terminals 806). Terminals 805-2 and 806-2 may be connected to each other.

Buck leg 802' may comprise a connection point "A", one or more switches, such as switch S1, connected between connection point "A" and terminal 805-1, and one or more switches, such as switch S2, connected between connection point "A" and terminal 805-2. Boost leg 803' may comprise a connection point "C", one or more switches, such as switch S3, connected between connection point "C" and terminal 806-1, and one or more switches, such as switch S4, connected between connection point "C" and terminal 106-2. Switches S1, S2, S3, and S4 may be implemented as Metal Oxide Semiconductor Field Effect Transistors (MOSFET's), Silicon Carbide (SiC) MOSFET's, Galium Nitride (GaN) based transistors, Insulated-Gate Bipolar Transistor (IGBT), Bipolar Junction Transistor (BJT), thyristors and the like.

Buck leg 802' may comprise diodes, such as diodes D1 and D2, connected across respective switches. Diode D1 may be connected across switch S1 such that the cathode of diode D1 may be connected to first terminal 805-1 and the anode of diode D1 may be connected to first connection point "A". Diode D2 may be connected across switch S2 such that the cathode of diode D2 may be connected to first connection point "A", and the anode of diode D2 may be connected to second terminal 805-2. Boost leg 103 may comprise diodes, such as diodes D3 and D4, connected across respective switches. Diode D3 may be connected across switch S3 such that the cathode of diode D3 may be connected to third terminal 806-1 and the anode of diode D3 may be connected to third connection point "C". Diode D4 may be connected across switch S4 such that the cathode of diode D4 may be connected to third connection point "C", and the anode of diode D4 may be connected to fourth terminal 806-2. Diodes D1, D2, D3, and D4 may be body diodes of the corresponding switches S1, S2, S3, and S4.

Inductor 804' may comprise a winding 808 (which may comprise a first end 810 and a second end 812). Inductor 804' may be connected between first connection point "A" and a second connection point "C" (e.g., the first end 810 may be connected to first connection point "A" and the second end $812_1$ may be connected to second d connection point "C").

According to aspects of the disclosure herein, power device controller 122 may control power converter 800 in any one of the buck conversion mode, the boost conversion mode, or the buck-boost conversion mode, and in any one of the CCM operational mode or the SCCM operational mode. For example, in the buck-boost conversion mode and the CCM operational mode, power device controller 122 may generate a first PWM signal for controlling switches S1 and S2 to transition between the conducting state and the non-conducting state (or vice versa) in a complementary manner. Power device controller 122 may generate a second PWM signal for controlling switches S3 and S4 in a complementary manner to transition between the conducting state and the non-conducting state (or vice versa) in a complementary manner. In the buck conversion mode and the CCM operational mode, power device controller 122 may generate a first PWM signal for controlling switches S1 and S2 to transition between the conducting state and the non-conducting state (or vice versa) in a complementary manner, control switch S3 to be in a conducting state, and control switch S4 to be in a non-conducting state. In the boost conversion mode and the CCM operational mode, power device controller 122 may generate a first PWM signal for controlling switches S3 and S4 to transition between the conducting state and the non-conducting state (or vice versa) in a complementary manner, control switch S1 to be in a conducting state, and control switch S2 to be in a non-conducting state.

In SCCM operational mode, power device controller 122 may control switch S3 to be in a non-conducting state. In the buck-boost conversion mode and the SCCM operational mode, power device controller 122 may generate a first PWM signal for controlling switches S1 and S2 to transition between the conducting state and the non-conducting state (or vice versa) in a complementary manner. Power device controller 122 may generate a second PWM signal for controlling switch S4. In the buck conversion mode and the SCCM operational mode, power device controller 122 may generate a first PWM signal for controlling switches S 1 and S2 to transition between the conducting state and the non-conducting state (or vice versa) in a complementary manner, and control switch S3 and switch S4 to be in a non-conducting state. In the boost conversion mode and the CCM operational mode, power device controller 122 may generate a first PWM signal for controlling switches S3 and S4 to transition between the conducting state and the non-conducting state (or vice versa) in a complementary manner, control switch S1 to be in a conducting state, and control switch S2 to be in a non-conducting state.

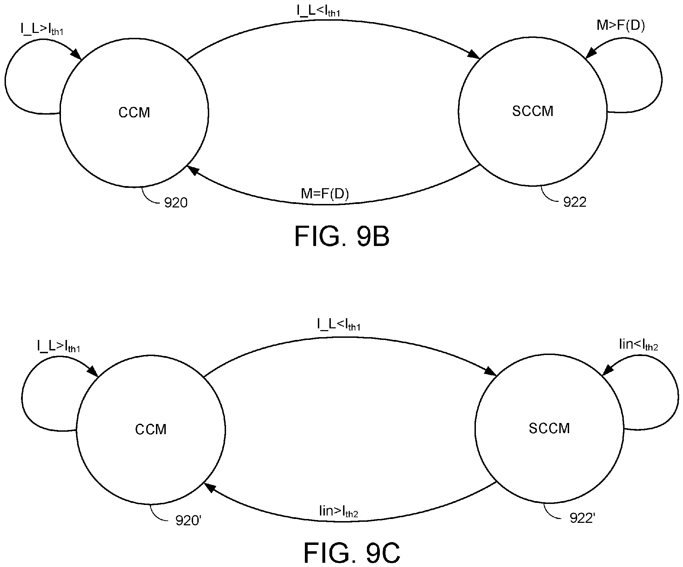

As discussed above, the SCCM operational mode prevents negative current from flowing through power converter 100. Therefore, power device controller 122 may need to determine when to transition between the CCM and the SCCM operational modes, or vice versa. According to aspects of the disclosure herein, power device controller 122 may determine to transition between CCM and SCCM operational mode, or vice versa based on a measurement of an electrical characteristic such as current or voltage or voltages. Reference is now made to Figures 9A, 9B and 9C. Figure 9A shows a flowchart depicting an example method for transitioning between operational modes according to aspects of the disclosure herein, Figures 9B and 9C show examples of a state machine implementation of the method in Figure 9A. For convenience, Figures 9A, 9B, and 9C are described in conjunction with elements contained in the figures discussed above. However, it should be understood that the subject matter described with respect to Figures 9A, 9B, and 9C is not so limited.

As shown in Figure 9A at 900, power device controller 122 may determine if power converter 100 operates in a first operational mode (e.g., CCM) or in a second operation mode (e.g., SCCM).

At 902, based on power device controller 122 determining that power converter 100 operates in the CCM operational mode, the method proceeds to 904. Based on power device controller 122 determining that power converter 100 operates in the SCCM operational mode, the method proceeds to 906.

At 904, sensor(s) 124 may measure a level of a first electrical parameter or parameters of power converter 100. For example, the first electrical parameter may be a current level through coupled inductor 104 (e.g., measured between connection points "D" and "C", or measured at the connection between LS-2 and LS-3). The first electrical parameter may be a current level of the current through terminal 105-1 or 105-2. The first electrical parameter may be a current level of the current through terminal 106-1 or 106-2. The first electrical parameter may be a voltage level, $V_{105}$, of a voltage between first terminals 105, or a voltage level, $V_{106}$, of a voltage between second terminals 106. The first electrical parameter may be the ratio, M, between a measured voltage, $V_{106}$, between second terminals 106, and a measured voltage, $V_{105}$, between first terminals 105.

At 906, sensor(s) 124 may measure a level of second electrical parameter or parameters of power converter 100. The second electrical parameter may be the same electrical parameter as the first electrical parameter or a different electrical parameter. For example, the second electrical parameter may be a current level through coupled inductor 104 (e.g., measured between connection points "D" and "C", or measured at the connection between LS-2 and LS-3). The second electrical parameter may be a current level of the current through terminal 105-1 or 105-2. The second electrical parameter may be a current level of the current through terminal 106-1 or 106-2. The second electrical parameter may be a voltage level, $V_{105}$, of the voltage between first terminals 105, or a voltage level, $V_{106}$, of the voltage between second terminals 106. The second electrical parameter may be the ratio, M, between the $V_{106}$ and $V_{105}$.

It is noted that the choice of an electrical parameter at 904 (e.g., the first electrical parameter) and at 906 (e.g., the second electrical parameter) may depend on various conditions. For example, transitioning from CCM to SCCM may be based on measurement of the current through coupled inductor 104. In SCCM, the current through coupled inductor 104 may reduce to levels, or exhibit characteristics (e.g., oscillations), which might render a measurement of the current through coupled inductor 104 to be unreliable. In such cases the transition from SCCM to CCM may be based on other parameters such as M (e.g., further explained in Figure 9B) or the current level through first terminal 105-1 (e.g., further explained in Figure 9C).

At 908, power device controller 122 may determine if the level of the measured first electrical parameter is different (e.g., larger or smaller) from a determined first value. Based on a determination that the level of the measured first electrical parameter is not different from the first value, the method may return to 900. Based on a determination that the level of the measured first electrical parameter is different from the first value, the method may proceed to 912.

At 910, power device controller 122 may determine if the level of the measured second electrical parameter is different (e.g., larger or smaller) from a second determined value. Based on a determination that the level of the measured second electrical parameter is not different from the second value, the method may return to 900. Based on a determination that the level of the measured second electrical parameter is different from the second value, the method may proceed to 914.

At 912 power device controller 122 may control power converter 100 to transition to the SCCM operational mode. For example, based on power device controller 122 controlling power converter 100 to transition to the SCCM operational mode, power device controller 122 may control switch HS-3 to transition to a non-conducting state.

At 914 power device controller 122 may control power converter 100 to transition to the CCM operational mode. For example, based on power device controller 122 controlling power converter 100 to transition to the CCM operational mode, power device controller 122 may control switch HS-3 as may be described above in conjunction with Figures 2A-2B, 3, or 4.

Figure 9B shows an example of a state machine implementation of the method shown in Figure 9A. Based on power device controller 122 controlling power converter 100 in the CCM operational mode (e.g., power converter 100 may be in a CCM state 920), power device controller 122 may remain in the CCM state 920 based on the level of the current through coupled inductor I_L being above a first threshold $I_{th1}$ (e.g., I_L > $I_{th1}$). The power device controller 122 may transition to the SCCM operational mode (e.g., SCCM state 922) based on the level of the current through coupled inductor I_L being below a first threshold $I_{th1}$ (e.g., I_L > $I_{th1}$).

In power converters operating in CCM, the conversion rate M may relate to the duty cycles of the PWM signals. For example, M=Dbuck/(1-Dboost) where Dbuck relates to the duty cycle of the PWM signals used to control the buck legs (e.g., first buck leg 102-1 and second buck leg 102-2, or buck leg 802'), and Dboost relates to the duty cycle of the PWM signal used to control the boost leg (e.g., boost leg 103, or boost leg 803'). With reference to Figure 9B, based on power device controller 122 controlling power converter 100 in the SCCM operational mode (power converter 100 may be in a SCCM state 922), power device controller 122 may remain in the SCCM state 922 based on a measured level of the conversion ratio, M, being larger than a value relating to the duty cycle, F(D) (e.g., F(D) =Dbuck/(1-Dboost). Power device controller may transition to the CCM state 920 based on the conversion ratio, M, being equal to F(D).

Figure 9C shows another example of a state machine implementation of the method shown in Figure 9A. Based on power device controller 122 controlling power converter 100 in the CCM operational mode (e.g., power converter 100 may be in a CCM state 920'), power device controller 122 may remain in the CCM state 920' based on the level of the current through coupled inductor I_L being above a first threshold $I_{th1}$ (e.g., I_L > $I_{th1}$). The power device controller 122 may transition to the SCCM state 922'based on the level of the current through coupled inductor I_L being below a first threshold $I_{th1}$ (e.g., I_L > $I_{th1}$).

Based on power device controller 122 controlling power converter 100 in the SCCM operational mode (power converter 100 may be in a SCCM state 922'), power device controller 122 may remain in the SCCM state 922' based on a measured level of the input current (e.g., the current through terminal 105-1 or 805-1) being smaller than a second threshold $I_{th2}$. Power device controller 122 may transition to the CCM state 920' based on the input current being larger than a second threshold $I_{th2}$.

According to aspects of the disclosure herein, power device controller 122 may control power converter 100 in one of two control modes. A first control mode may use a closed loop control over the current through coupled inductor 104. For example, in the closed loop control mode, power device controller may use a Proportional and Integral (PI) control loop, or a Proportional, Integral and Derivative (PID) closed loop model, to minimize a difference between a measured level of the current through coupled inductor 104 or inductor 804, and a level of a reference current.

However, as the current through coupled inductor 104 reduces, measurements thereof may not be reliable. Therefore, an open loop control mode may be used. In the open loop control mode, power device controller 122 may generate the PWM signals based on a computation model of the duty cycle. For example, such a computational model may include a relationship between the duty cycle and the inductor current. For example, a duty cycle, Don, in the buck conversion mode and the SCCM operational mode, for a duty cycle smaller than half (D < 0.5), may be determined based on the following computational model:

$$D_{on} = \sqrt{\frac{2\,L_{lk}f_{sw}I_L}{V_i(1-2M)}} \tag{2}$$

A duty cycle, Don, in the buck conversion mode and the SCCM operational mode, for a duty cycle larger than half (D > 0.5), may be determined based on the following computational model:

$$D_{on} = \sqrt{\frac{2\,L_{lk}f_{sw}I_L(2M-1)}{V_i 2M(1-M)}} \tag{3}$$

In equations (2) and (3), $L_{lk}$ represents the inductance of coupled inductor 104 or inductor 804. $f_{sw}$ represents the switching frequency, $I_L$ represents the current through inductor 104 or inductor 804, $V_i$ represents the voltage between first terminals 105, and M is as above.

In low current levels through coupled inductor 104, the measurements of the current may not be reliable. In such cases, power device controller 122 may determine the transition between control modes based on measurements of the input voltage level, the output voltage level, or both the input voltage level and the output voltage level (e.g., based on the ratio, M, between the output and input voltage levels).

The power converter may be controlled based on the closed loop control mode, for example, when operating in CCM. The power converter may be controlled based on the open loop control mode, for example, when operating in SCCM. The transition between control modes and operational modes may be independent from each other.

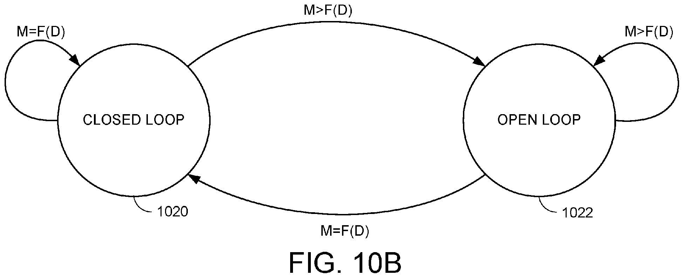

Reference is now made to Figures 10A and 10B. Figure 10A shows a flowchart depicting an example method for transitioning between control modes according to aspects of the disclosure herein, and Figures 10B shows an example of a state machine implementation of the method in Figure 10A. While Figures 10A and 10B may be explained with respect to elements discussed above, this is for ease of understanding and it should be appreciated that the embodiments described with respect to the figures are not so limited. At 1000, power device controller 122 may determine if power converter 100 operates in a first control mode (e.g., closed loop control mode) or in a second control mode (e.g., open loop control mode).

At 1002, based on power device controller 122 determining that power converter 100 operates in the closed loop control mode (abbreviated 'CL' in Figure 10A), the method proceeds to 1004. Based on power device controller 122 determining that power converter 100 operates in the open loop control mode (abbreviated 'OL' in Figure 10A), the method proceeds to 906.

At 1004, sensor(s) 124 may measure a level of a first electrical parameter or parameters of power converter 100. For example, the first electrical parameter may be a current level through coupled inductor 104 (e.g., measured between connection points "D" and "C", or measured at the connection between LS-2 and LS-3). The first electrical parameter may be a current level of the current through terminal 105-1 or 105-2. The first electrical parameter may be a current level of the current through terminal 106-1 or 106-2. The first electrical parameter may be a voltage level, $V_{105}$, a voltage between first terminals 105, a voltage level, $V_{106}$, between second terminals 106. The first electrical parameter may be the ratio, M, between a measured voltage, $V_{106}$, between second terminals 106, and a measured voltage, $V_{105}$, between first terminals 105.

At 1006, sensor(s) 124 may measure a level of a second electrical parameter or parameters of power converter 100. The second electrical parameter may be the same parameter as the first parameter or a different parameter. For example, the second electrical parameter may be a current level through coupled inductor 104 (e.g., measured between connection points "D" and "C", or measured at the connection between LS-2 and LS-3). The second electrical parameter may be a current level of the current through terminal 105-1 or 105-2. The second electrical parameter may be a current level of the current through terminal 106-1 or 106-2. The second electrical parameter may be a voltage level, $V_{105}$, between first terminals 105, or a voltage level, $V_{106}$, between second terminals 106. The second electrical parameter may be the ratio, M, between the $V_{106}$ and $V_{105}$.

At 1008, power device controller 122 may determine if the level of the measured first electrical parameter is different (e.g., larger or smaller) from a first determined value. Based on a determination that the level of the measured first electrical parameter is not different from the first value, the method may return to 1000. Based on a determination that the level of the measured first electrical parameter is different from the first value, the method may proceed to 1012.

At 1010, power device controller 122 may determine if the level of the measured second electrical parameter is different (e.g., larger or smaller) from a second determined value. Based on a determination that the level of the measured second electrical parameter is not different from the second value, the method may return to 1000. Based on a determination that the level of the measured second electrical parameter is different from the second value, the method may proceed to 1014.

At 1012 power device controller 122 may control power converter 100 to transition to the open loop control mode. In the open loop control mode, power device controller may generate the PWM signals based on a computational model of the duty cycle. For example, the computational model may include a relationship between the duty cycle and the inductor current. Thus, in the open loop control mode, power device controller 122 may generate the PWM signal or signal used to control power converter 100 used based on the computational model.

At 1014 power device controller 122 may control power converter 100 to transition to the closed loop control mode. For example, in the closed loop control mode, power device controller may use a Proportional and Integral (PI) control loop, or a Proportional, Integral and Derivative (PID) control loop, to minimize a difference between a measured level of the current through coupled inductor 104 or inductor 804, and a level of a reference current.

Figure 10B shows an example of a state machine implementation of the method shown in Figure 10A. Based on power device controller 122 controlling power converter 100 in the closed loop control mode (e.g., power converter 100 may be in a closed loop state 1020), power device controller 122 may remain in the closed loop state 1020 based on a measured level of the conversion ratio, M, being equal to a value relating to the duty cycle, F(D) (e.g., F(D) =Dbuck/(1-Dboost). Power device controller 122 may transition to control power converter 100 in the open loop control mode (e.g., transition to open loop state 1022) based on a measured level of the conversion ratio, M, being larger than a value relating to the duty cycle, F(D). Power device controller 122 may remain in open loop state 1022 based on a measured level of the conversion ratio, M, being larger than a value relating to the duty cycle, F(D). Based on power converter 100 being in the open loop state 1020, power device controller 122 may transition to the closed loop state 1020 based on a measured level of the conversion ratio, M, being equal to a value relating to the duty cycle, F(D).

According to aspects of the disclosure herein, there may be a need to balance the currents through the winding of the coupled (e.g., to avoid saturation of core 114 of coupled inductor 104). For example, according to aspects of the disclosure herein, the currents between the windings may be based on a level of a measured electrical parameter. For example, sensor(s) 124 may comprise a first current sensor configured to measure a level of a current through first winding $108_1$ and a second current sensor configured to measure a level of a current through second winding $108_2$. Power device controller 122 may determine a correction (e.g., increase or decrease) to a first duty cycle of a first PWM used to control first buck leg 102-1 and a second duty cycle of a second PWM signal used to control second buck leg 102-2. Control may use a closed loop control model (e.g., a PI control model or a PID control model) to minimize the difference between the levels of the measured currents through first winding $108_1$ and second winding $108_2$.

Aspects of the disclosure described herein may be used in a power converter which may comprise a buck converter which may comprise a single buck leg and a boost converter which may comprise a plurality of boost leg, where the buck converter and the boost converter share a coupled inductor. Reference is now made to Figure 11, which shows a block diagram depicting and example power converter 1100 according to aspects of the disclosure herein. Power converter 1100 may be a buck and boost converter, and may comprise a buck converter 1107, a plurality of boost converters 1111 and a shared coupled inductor 1104. Buck converter 1107 may comprise a buck switching leg such as buck leg 1102, and shared coupled inductor 1104. Buck leg 1102 may be similar to any one of buck switching legs 102-1, 102-2, ..., 102-N. Plurality of boost converters 1111 may comprise a plurality of boost legs 1103-1, 1103-2, ..., 1103-N, and shared coupled inductor 1104. Each of plurality of boost legs 1103-1, 1103-2, ..., 1103-N may be similar to boost leg 103. Shared coupled inductor 1104 may comprise a plurality of windings, wound around a common core, where each winding corresponds to a respective boost leg of plurality of boost converter 1111. In cases in which a system, such as system 1100, operates in SCCM Boost mode, a diode may be connected across the high side buck switch, such that the cathode of the diode is connected to connection point "A", to block the reverse current.

The disclosure herein describes a power conversion apparatus which comprises two power converters. According to some examples, the two power converters are connected to a power source at opposite polarities. The first power converter converts the power from the power source to produce a first converted voltage and the second power converter converts the power from the power source to produce a second converted voltage. The voltage produced by the power conversion apparatus is the of sum first voltage and the second voltage. The two power converters share a coupled inductor, which may comprise two windings, wound around a common core, where each winding of the two windings corresponds to a power converter.

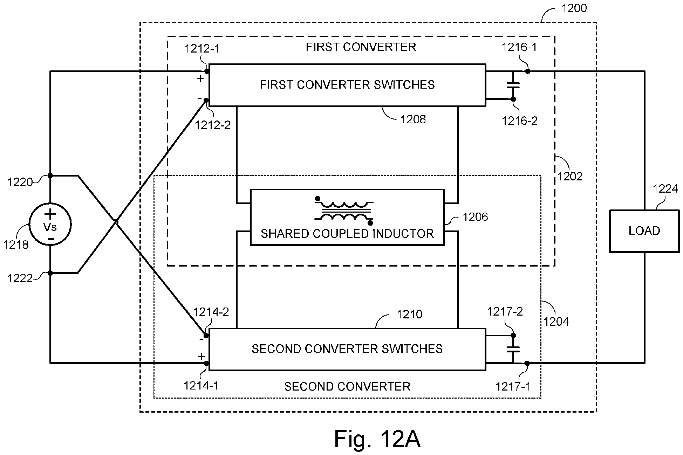

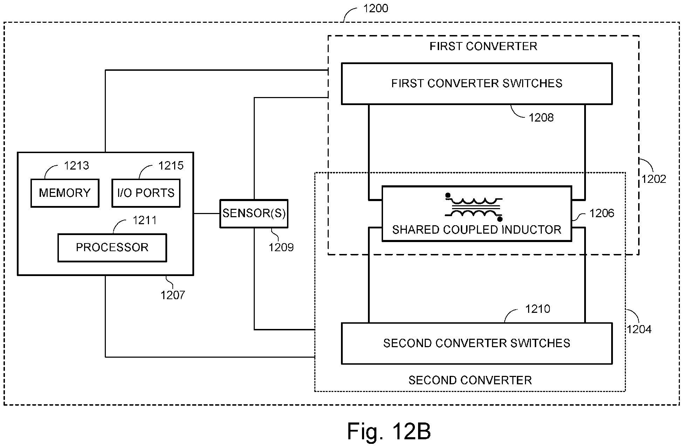

Reference is made to Figures 12A and 12B, which show block diagrams depicting an example power conversion apparatus 1200 according to aspects of the disclosure herein. Power conversion apparatus 1200 may comprise a first converter 1202 (e.g., a boost converter, a buck converter, a buck-boost converter) a second converter 1204 (e.g., a boost converter, a buck converter, a buck-boost converter) and a shared coupled inductor 1206. Power conversion apparatus may comprise a controller 1207 and sensor(s) 1209. First converter 1202 may comprise first converter switches 1208 and shared coupled inductor 1206. Second converter 1204 may comprise second converter switches 1210 and shared coupled inductor 1206. As may further be shown in Figure 12B, shared coupled inductor 1206 may comprise a plurality of windings, wound around a common core, where each winding corresponds to a respective one of first converter 1204 and second converter 1206. Shared coupled inductor 1206 may be similar to shared coupled inductor 104 described herein above in conjunction with Figures 1A, 1B, 3, 4, 5A, 6A and 7.

Controller 1207 may be similar to power device controller 122 (Figure 1C) partially or fully implemented as one or more computing devices or may include one or more processors, such as an Application Specific Integrated Circuit (ASIC) controller, Field Programmable Gate Array (FPGA) controller, a microcontroller, or a multipurpose computer, to name a few non-limiting examples. Controller 1207 may comprise one or more processors 1211, connected to memory 1213 and Input/Output (I/O) ports 1215. Memory 1213 may store computer readable instructions as well as data (e.g., measurements from sensor(s) 1209 or parameters). I/O ports 1215 may be configured to connect modules (e.g., sensor(s) 1209, gate drivers, switches, or other modules of conversion apparatus 1200) to processor 1211. The one or more processors 1211 may execute the instructions, which may result in the processor 1211 performing one or more steps or functions as described herein that are attributed to one or both of power device controller 1207 and processor 1211.

Sensor(s) 1209 may be similar to sensor(s) 124 (Figure 1C) comprise one or more voltage sensors (e.g., implemented by employing a resistive or capacitive divider, a resistive or capacitive bridge, or comparators), one or more current sensors (e.g., implemented by employing a Current Transformer (CT) sensor, a Hall Effect sensor, or a zero flux sensor, current sense resistors, and the like), one or more temperature sensors, or one or more frequency sensors. Sensor(s) 124 may be placed in various positions in power conversion apparatus 1200, to measure electrical parameters (e.g., voltage or current) relating to power conversion apparatus 1200, and used by controller 1209 for controlling power conversion apparatus 1200.

A positive source-side terminal 1212-1 of first converter 1208 may be coupled to a negative source-side terminal 1214-2 of second converter 1210, and both may be coupled to a positive terminal 1220 of a power source 1218. A negative source-side terminal 1212-2 of first converter 1208 may be coupled to a positive source-side terminal 1214-1 of second converter 1210, and both may be coupled to a negative terminal 1222 of power source 1218. Thus, the voltage across positive source-side terminal 1212-1 and negative source-side terminal 1212-2 may be the voltage of power source 1218 at a first polarity. The voltage across positive source-side terminal 1214-1 and negative source-side terminal 1212-4 may be the voltage of power source 1218 at a second polarity which may be opposite the first polarity.

Controller 1207 may control first converter switches 1208 such that first converter 1202 converts a voltage between positive source-side terminal 1212-1 and negative source-side terminal 1212-2, to a first converted voltage between load-side terminals 1216-1 and 1216-2 of first converter 1202. Controller 1207 may control second converter switches 1210 such that second converter 1204 converts a voltage between positive source-side terminal 1214-1 and negative source-side terminal 1214-2 to a second converted voltage between load-side terminals 1217-1 and 1217-2 of second converter 1204. Load-side terminal 1216-1 and load-side terminal 1217-1 may be coupled to a load 1224.

Controller 1207 may control first converter switches 1208 and second converter switches 1210 to alternate between a conducting state and a non-conducting state, by generating a Pulse Width Modulation (PWM) signal or signals. For example, controller 1207 may generate a first PWM signal for controlling first converter switches 1208 and a second PWM signal for controlling second converter switches 1210. According to some embodiments of the disclosure herein, the first PWM signal and the second PWM signal may have the same phase, one with respect to the other. According to some embodiments of the disclosure herein the second PWM signal may be phase shifted with respect to the first PWM signal. According to some examples in the disclosure herein, the second PWM signal may be phase shifted by 180 degrees with respect to the first PWM signal. Controller 1207 may control first converter 1202 and/or second converter 1204 based on the CCM operational mode or the SCCM operational mode described in the disclosure herein (e.g., in conjunction with Figure 7 in cases in which a boost converter is used).

Resulting from the opposing polarity connection of first converter 1202 and second converter 1204 to source 1218, the voltage between load-side terminal 1216-1 and load-side terminal 1217-1 is the sum of the first converted voltage and the second converted voltage. For example, if the voltage between load-side terminal 1216-1 and 1216-2 is VL1, and the voltage between load-side terminal and 1217-2 is VL2, the voltage, Vo, across load 1224 (e.g., the output voltage) may be:

$$Vo = VL1 + VL2 \qquad (4)$$

Letting M1 be the conversion ratio of first converter 1202 and M2 be the conversion ratio of second converter 1204, and VS be the voltage produced by power source 1218, then Vo may be:

$$Vo = VS*M1 + VS*M2 \qquad (5)$$

If M1 = M2, then Vo may be:

$$Vo=2*VS \qquad (6)$$

According to the disclosure herein, using two power converters connected to a power source at opposite polarities may enable to achieve conversion ratios with components having lower ratings (e.g., relative to a single converter with the same conversion ratio). Using shared coupled inductor 1206 by the first converter 1208 and the second converter 1210 may enable the reduction in size and/or cost of power conversion apparatus 1200, while achieving similar characteristics (e.g., ripple current) of a single converter with a single inductor.

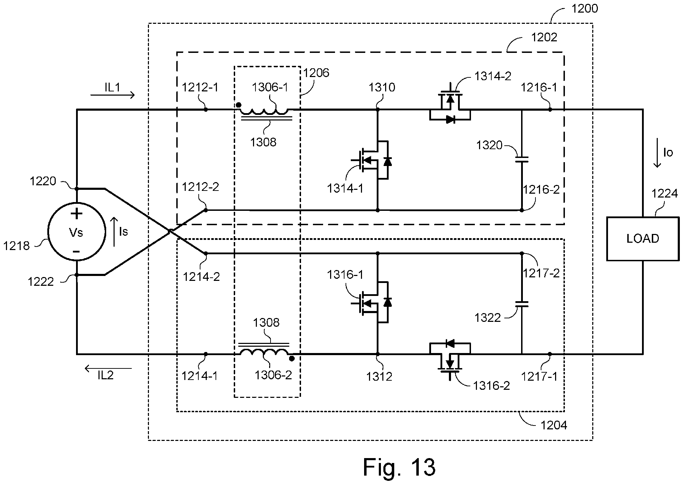

Reference is made to Figure 13, which shows an example power conversion apparatus, where first converter 1202 and second converter 1204 are boost converters. To that end, first converter 1202 comprises capacitor 1320, and first converter switches 1208 comprise a first switch 1314-1 and a second switch 1314-2. Second converter 1204 comprises capacitor 1322, and second converter switches 1208 comprise a third switch 1316-1 and a fourth switch 1316-2. Switches 1314-1, 1314-2, 1316-1 and 1316-2 may be implemented as Metal Oxide Semiconductor Field Effect Transistors (MOSFET's), Silicon Carbide (SiC) MOSFET's, Gallium Nitride (GaN) based transistors, Insulated-Gate Bipolar Transistor (IGBT), Bipolar Junction Transistor (BJT), thyristors and the like, to name a few non-limiting examples. In the example shown in Figure 2, switches 1314-1, 1314-2, 1316-1 and 1316-2 are depicted as MOSFET's.

First switch 1314-1 may be connected between negative source-side terminal 1212-2 and connection point 1310. Source-side terminal 1212-2 and load-side terminal 1216-2 may be coupled with each other. Second switch 1314-2 may be coupled between connection point 1310 and load-side terminal 1216-1. First winding 1306-1 of coupled inductor 1206 may be coupled between connection point 1310 and source-side terminal 1212-1. Capacitor 1320 may be coupled between load-side terminal 1216-1 and load-side terminal 1216-2. Third switch 1316-1 may be connected between positive source-side terminal 1214-1 and connection point 1312. source-side terminal 1214-2 and load-side terminal 1217-2 may be coupled with each other. Fourth switch 1316-2 may be coupled between connection point 1312 and load-side terminal 1217-1. First winding 1306-2 of coupled inductor 1206 may be coupled between connection point 1312 and source-side terminal 1214-2. Capacitor 1322 may be coupled between load-side terminal 1217-1 and load-side terminal 1217-2. First winding 1306-1 and second winding 1306-2 may be wound around a common core 1308. For example, first winding 1306-1 and second winding 1306-2 may be wound around a common core 1308 in the same direction (e.g., clockwise, or counterclockwise). First winding 1306-1 and second winding 1306-2 may be wound around a common core 1308 in opposite directions.

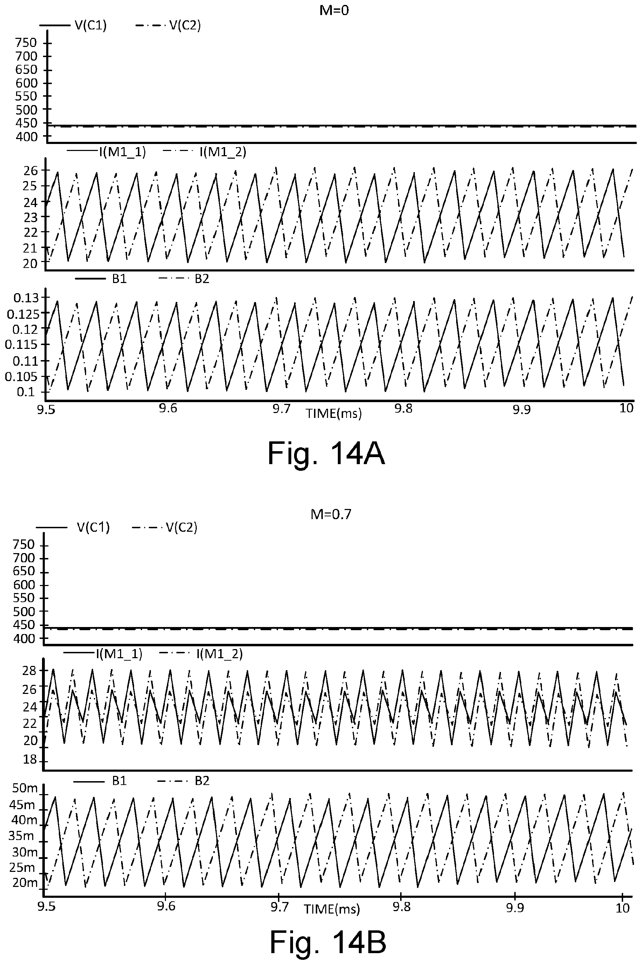

As mentioned above, power conversion apparatus 1200 uses coupled inductor 1206. Coupled inductor 1206 may comprise two windings (e.g., first winding 1306-1 and second winding 1306-2 - Figure 2) wound around a common core (e.g., common core 1308 - Figure 2). A characteristic of a coupled inductor is a coupling coefficient between the windings. If the coupling coefficient between the two windings is 1, then there is no leakage inductance. When using coupled inductors in power converters, the leakage inductances are used in the power conversion process. The applicant discovered that using a coupling coefficient between 0.5 and 0.8 provides a trade-off between converter performance (e.g., ripple current, efficiency) and coupled inductor characteristics (e.g., size and cost). Reference is made to Figures 14A and 14B, which show example waveforms related to power conversion apparatus 1200. Figure 14A shows the voltage V(C1) across capacitors 1320, the current (I(M1_1) and magnetic field (B1) through winding 1306-1 in cases in which the coupling coefficient is zero. Figure 14A further shows the voltage V(C2) across capacitor 1322 respectively, the current (I(M1_2) and magnetic field (B2) through winding 1306-2 in cases in which the coupling coefficient is zero. Figure 14A shows the voltages V(C1) across capacitors 1320, V(C2) across capacitor 1322, the currents (I(M1_1) and I(M1_2)), and the magnetic fields (B1 &B2) through winding 1306-1 and 1306-2, versus time, in cases in which the coupling coefficient is zero. Figure 14B shows the voltages V(C1) across capacitors 1320, V(C2) across capacitor 1322, the currents (I(M2_1) and I(M2_2)), and the magnetic fields (B1 &B2) through winding 1306-1 and 1306-2, versus time, in cases in which the coupling coefficient is 0.7.

Controlling a power conversion apparatus, such as power conversion apparatus 1200 shown in Figures 12A, 12B and 13, may comprise controlling current Is (shown in Figure 13), flowing through power source 1218, as well as controlling the inductors' currents, IL1 and IL2 (both shown in Figure 13) flowing through first windings 1306-1 and second windings 1306-2 respectively. Controlling the inductors' currents, IL1 and IL2, may comprise balancing IL1 and IL2, such that IL1 and IL2 are maintained equal or substantially equal. According to the disclosure herein, controller 1207 (shown in Figure 12B) may comprise a single control loop for controlling Is, IL1, and IL2 as further explained below.

In a power conversion apparatus such as power conversion apparatus 1200, it can be shown that the source current, Is, may be expressed as follows:

$$Is = \frac{(IL1+IL2)}{\left(1+\frac{Vs}{Vo}\right)} \tag{7}$$

Re-arranging Equation (7) results in the following Equation:

$$Is * \left(1 + \frac{Vs}{Vo}\right) = (IL1 + IL2) \tag{8}$$

where Vs is the input voltage (e.g., the voltage generated by power source 1218) and Vo is the load voltage (e.g., the voltage between load-side terminal 1216-1 and load-side terminal 1217-1). From Equation (8), if Il,1 and IL2 are balanced, then each would be equal to half (1/2) of Is multiplied by a gain factor. Thus, by controlling each of IL1 and IL2 to be half of a determined (e.g., required) current level (e.g., corresponding to the left-hand side of Equation (8)), controller 1207 may control Is, as well as IL1 and IL2 using a single control loop.

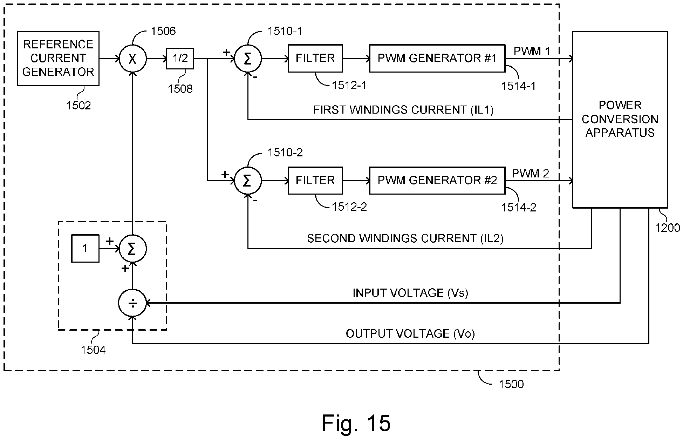

Reference is now made to Figure 15, which shows an example control loop 1500 for controlling Is, IL1, and IL2 according to the disclosure herein. Control loop 1500 may be implemented in controller 1207. Control loop 1500 may comprise a reference current generator 1502, a gain factor block 1504, a multiplier 1506, a divider 1508. Control loop 1500 may further comprise, a first adder 1510-1 and a second adder 1510-2, a first filter 1512-1 and a second filter 1512-2, and a first PWM generator 1514-1 and a second PWM generator 1514-2.

Reference current generator 1502 may generate a reference current corresponding to a determined (e.g., a required) source current, Is, through power source 1218. This current may correspond to a determined (e.g., a required) power which power source 1218 may supply. Using measurements of the source voltage, Vs, and the load voltage, Vo, from power conversion apparatus 1200 (e.g., received from sensor(s) 1209 - Figure 12B), gain factor block 1504 may calculate a value for a gain factor corresponding to the (1+Vs/Vo) term in Equations (7) and (8). Multiplier 1506 may multiply the reference current from reference current generator 1502 by the gain factor value from gain factor block 1504 to determine a level of the inductors current. The determined level of the inductors current corresponds to the sum of inductors' currents (e.g., (II,1+IL2). Since the level of the first inductor current, IL1, and the level of the second inductor current, IL2, should be maintained to be balanced (e.g., equal or substantially equal), the determined level of the inductors current is divided by the number of converters (e.g., which may correspond to the number of inductors) in power conversion apparatus 1200. In the example shown in Figures 12A, 12B, and 13, converter apparatus includes two converters, first converter 1202 and second converter 1204. Thus, the sum of inductors currents may be divided by 2. To that end, divider 1502 divides the sum of inductors currents from multiplier 1506 by 2 to determine an inductor current level for each of first windings 1306-1 and second windings 1306-2.

Adder 1510-1 receives from sensor(s) 1209 a measurement of the current level, through first windings 1306-1 and subtracts this measured current level from the determined inductor current level through windings 1306-1 to produce a first error current. The first error current may be filtered by filter 1512-1. For example, filter block 1512-1 may be a Low Pass Filter (LPF). Filter block 1512-1 may be a proportional (P), an integral (I), or a derivative (D) filter, or any combination thereof (e.g., PI filter, PID filter, ID filter, or PD filter). The filtered current error may correspond to a PWM correction by which the PWM generated by PWM generator 1514-1 may generate the corresponding PWM signal controlling switches 1314-1 and 1314-2 in first converter 1202.

Similarly, adder 1510-2 receives from sensor(s) 1209 a measurement of the current level, through first windings 1306-2 and subtracts this measured current level from the determined inductor current level through windings 1306-2 to produce a second error current. The second error current may be filtered by filter 1512-2. For example, filter block 1512-2 may be a Low Pass Filter (LPF). Filter block 1512-2 may be a proportional (P), an integral (I), or a derivative (D) filter, or any combination thereof (e.g., PI filter, PID filter, ID filter, or PD filter). The filtered second current error may correspond to a PWM correction by which the PWM generated by PWM generator 1514-2 may generate the corresponding PWM signal controlling switches 1316-1 and 1316-2 in first converter 1204.

Hereinafter, various characteristics will be highlighted in a set of numbered clauses or paragraphs. These characteristics are not to be interpreted as being limiting on the invention or inventive concept, but are provided merely as a highlighting of some characteristics as described herein, without suggesting a particular order of importance or relevancy of such characteristics.

Clause 1A. An apparatus comprising: a power converter comprising: a shared coupled inductor having windings around a common core.

Clause 1B. The apparatus of clause 1A, the apparatus further comprising: a plurality of buck converters coupled between a first terminal and a second terminal, wherein the plurality of buck converters comprises: a plurality of buck switching legs, and the shared coupled inductor; and a boost converter coupled between a third terminal and a fourth terminal, the boost converter comprising: a boost switching leg, and the shared coupled inductor. Reference to clause 1 herein may refer to one or each of clause 1A and clause 1B.

Clause 2. The apparatus of clause 1, the apparatus further comprising a controller configured to control the power converter to convert power from the first terminal and the second terminal to the third terminal and the fourth terminal, using one of a first conversion mode, a second conversion mode, or a third conversion mode.

Clause 3. The apparatus of any one of clauses 1-2, wherein the boost switching leg comprises a first switch and a second switch coupled at a first connection point, wherein the first switch is coupled between the third terminal and the first connection point, wherein the boost switching leg further comprises a diode coupled across the first switch, wherein an anode of the diode is coupled to the first connection point, and a cathode of the diode is coupled to the third terminal, wherein the diode restricts a negative current from flowing through the shared coupled inductor, and wherein in the first conversion mode, the second conversion mode or the third conversion mode, the controller is configured to control the first switch to be in a non-conducting state.

Clause 4. The apparatus of any one of clauses 1-3, wherein based on the first conversion mode, the controller is configured to generate a first PWM signal, and a second PWM signal for controlling the power converter to reduce a first voltage between the first terminal and the second terminal to a second voltage between the third terminal and the fourth terminal.

Clause 5. The apparatus of any one of clauses 1-4, wherein based on the first conversion mode, the controller is further configured to: control the second switch of the boost switching leg to be in a non-conducting state; control, using the first PWM signal, a third switch and a fourth switch of a first buck switching leg of a first buck converter of the plurality of buck converters to alternate between a conducting state and a non-conducting state; and control, using the second PWM signal, a fifth switch and a sixth switch of a second buck switching leg of a second buck converter of the plurality of buck converters to alternate between the conducting state and the non-conducting state.

Clause 6. The apparatus of any one of clauses 1-5, wherein, using the first PWM signal, the controller is further configured to control the fourth switch in a complementary manner with respect to the third switch, wherein, using the second PWM signal, the controller is further configured to control the sixth switch in a complementary manner with respect to the fifth switch.

Clause 7. The apparatus of any one of clauses 1-6, wherein the second PWM signal is phase shifted by 180 degrees with respect to the first PWM signal.

Clause 8. The apparatus of any one of clauses 1-7, wherein based on the second conversion mode, the controller is configured generate a first PWM signal for controlling the power converter to increase a first voltage between the first terminal and the second terminal to a second voltage between the third terminal and the fourth terminal.

Clause 9. The apparatus of any one of clauses 1-8, wherein, based on the second conversion mode, the controller is further configured to: control, using the first PWM signal, a second switch of the boost switching leg to alternate between a conducting state and the non-conducting state; control a third switch of a first buck switching leg of a first buck converter of the plurality of buck converters and a fifth switch of a second buck switching leg of a second buck converter of the plurality of buck converters to be in the conducting state; and control a fourth switch of the first buck switching leg of the first buck converter of the plurality of buck converters and a sixth switch of a second buck switching leg of a second buck converter of the plurality of buck converters to be in the non-conducting state.

Clause 10. The apparatus of any one of clauses 1-9, wherein based on the third conversion mode, the controller is configured to generate a first PWM signal, a second PWM signal, and a third PWM signal for controlling the power converter to change a first voltage between the first terminal and the second terminal to a second voltage between the third terminal and the fourth terminal.

Clause 11. The apparatus of any one of clauses 1-10, wherein based the third conversion mode, the controller is further configured to: control, using the first PWM signal, a third switch and a fourth switch of a first buck switching leg of a first buck converter of the plurality of buck converters to alternate between a conducting state and a non-conducting state; control, using the second PWM signal, a fifth switch and a sixth switch of a second buck switching leg of a second buck converter of the plurality of buck converters to alternate between a conducting state and a non-conducting state; and control, using a third PWM signal, a second switch of the boost switching leg to alternate between a conducting state and a non-conducting state.

Clause 12. The apparatus of any one of clauses 1-11, wherein, the second PWM signal is out of phase with respect to the first PWM signal, and wherein a frequency of the third PWM signal is double a frequency of the first PWM signal and the second PWM signal.

Clause 13. The apparatus of any one of clauses 1-12, wherein using the first PWM signal, the second PWM signal and the third PWM signal, the controller is configured to control the sixth switch complementary to the first and third switches.

Clause 14. The apparatus of any one of clauses 1-13, wherein, using the first PWM signal and the third PWM signal, the controller is configured to control the first switch and the sixth switch to transition concurrently to a conducting state, and wherein, using the second PWM signal and the third PWM signal, the controller is configured to control, the third switch and the sixth switch to transition concurrently to a conducting state.

Clause 15. The apparatus of any one of clauses 1-14, where a first duty cycle of the first PWM signal and of second PWM signal is different from a second duty cycle of the third PWM signal.

Clause 16. The apparatus of any one of clauses 1-15, wherein, using the first PWM signal, the controller is further configured to control the second switch in a complementary manner with respect to the first switch, wherein, using the second PWM signal, the controller is further configured to control the fourth switch in a complementary manner with respect to the third switch.

Clause 17. The apparatus of any one of clauses 1-16, wherein the controller is configured to control the power converter in one of: a closed loop control mode or an open loop control mode based on a closed loop control model of a current through the coupled inductor; or an open loop control mode based on an open loop computational model of a current through the shared coupled inductor.

Clause 18. The apparatus of any one of clauses 1-17, wherein each winding of the windings of the shared coupled inductor corresponds to a respective buck converter of the plurality of buck converters.

Clause 19. The apparatus of any one of clauses 1-18, wherein the controller is configured to generate a plurality of PWM signals for controlling the plurality of buck converters, wherein a PWM signal of the plurality of PWM signals is determined as a reference PWM signal, wherein a phase shift between the reference PWM signal and each remaining one of the plurality of PWM signals is correspondingly determined by:
$$\Delta\phi_i = i * \frac{360}{N} \ for \ i \in \{1, 2, ..., N-1\},$$
wherein N is the number of the plurality of buck legs.

Clause 20A. A method comprising: determining, by a controller of a power converter, if the power converter is in a first operational mode or a second operation mode.

Clause 20B. The method of clause 20A, the method further comprising: based on the power converter operating in the first operational mode, measuring a first electrical parameter of the power converter; based on the power converter operating in the second operational mode, measuring a second electrical parameter of the power converter; based on a level of the first electrical parameter being different from a first predetermined value, transitioning the power converter, by the controller, to the second operational mode; and based on a level of the second electrical parameter being different from a second predetermined value, transitioning the power converter, by the controller, to the first operational mode, wherein, the second operational mode comprises turning a switch in the power converter to a non-conducting state, wherein the switch is coupled across a diode, and wherein the diode restricts a reverse current from flowing through the power converter. Reference to clause 20 herein may refer to one or each of clause 20A and clause 20B.

Clause 21A. An apparatus comprising: a power converter comprising: a shared coupled inductor having windings around a common core.

Clause 21B. The apparatus of clause 21A, the apparatus further comprising: a plurality of buck converters coupled between a first terminal and a second terminal, each buck converter of the plurality of buck converters comprising: a buck switching leg, and the shared coupled inductor; and a boost converter coupled between a third terminal and a fourth terminal, the boost converter comprising: a boost switching leg, and the shared coupled inductor. Reference to clause 1 herein may refer to one or each of clause 21A and clause 21B.

Clause 22. The apparatus of clause 21, the apparatus further comprising a controller, coupled to the plurality of buck converters and to the boost converter, wherein, based on one of a first operational mode and a second operational mode, the controller is configured to control the plurality of power converter to convert power from the first terminal and the second terminal to the third terminal and the fourth terminal.

Clause 23. The apparatus of any one of clauses 21-22, wherein the controller, operating in the first operational mode, is configured to control the power converter using one of a first conversion mode, a second conversion mode, or a third conversion mode.

Clause 24. The apparatus of any one of clauses 21-23, wherein, based on the first conversion mode, the controller is configured to generate a first PWM signal and a second PWM signal for controlling the power converter to reduce a first voltage between the first terminal and the second terminal to a second voltage between the third terminal and the fourth terminal.

Clause 25. The apparatus of any one of clauses 21-24, wherein, based on the first conversion mode, the controller is configured to: control, using the first PWM signal, a first switch and a second switch of a first buck switching leg of a first buck converter of the plurality of buck converters to alternate between the conducting state and the non-conducting state; control, using the second PWM signal, a third switch and a fourth switch a second buck switching leg of a second buck converter of the plurality of buck converters to alternate between the conducting state and the non-conducting state; control a fifth switch of the boost leg switch to be in the conducting state; and control a sixth switch of the boost leg to be in the non-conducting state.

Clause 26. The apparatus of any one of clauses 21-25, wherein, the second PWM signal is phase shifted by 180 degrees with respect to the first PWM signal.

Clause 27. The apparatus of any one of clauses 21-26, wherein based on the first PWM signal, the controller is further configured to control the second switch in a complementary manner with respect to the first switch, and wherein based on the second PWM signal, the controller controls the fourth switch in a complementary manner with respect to the third switch.

Clause 28. The apparatus of any one of clauses 21-27, wherein the controller is further configured to control the second switch to transition from the non-conducting state to the conducting state, a first determined time-period after the first switch transitions from the conducting state to the non-conducting state, and wherein the controller is further configured to control the second switch to transition from the conducting state to the non-conducting state, a second determined time-period after the first switch transitions from the non-conducting state to the conducting state.

Clause 29. The apparatus of any one of clauses 21-28, wherein the controller is further configured to control the fourth switch to transition from the non-conducting state to the conducting state, a third determined time-period after the third switch transitions from the conducting state to the non-conducting state, and wherein the controller is further configured to control the fourth switch to transition from the conducting state to the non-conducting state, a fourth determined time-period after the third switch transitions from the non-conducting state to the conducting state.

Clause 30. The apparatus of any one of clauses 21-29, wherein, based on the second conversion mode, the controller is configured to generate a first PWM signal for controlling the power converter to increase a first voltage between the first terminal and the second terminal to a third voltage between the third terminal and the fourth terminal.

Clause 31. The apparatus of any one of clauses 21-30, wherein based on the second conversion mode, the controller is configured to: control a first switch and a third switch of a first buck switching leg of a first buck converter of the plurality of buck converters to be in the conducting state; control a second switch and the fourth switch of a second buck switching leg of a second buck converter of the plurality of buck converters to be in the non-conducting state; and control, using the first PWM signal, a fifth switch and a sixth switch of the boost switching leg to alternate between conducting state and the non-conducting state.

Clause 32. The apparatus of any one of clauses 21-31, wherein, based on the first PWM signal, the controller is further configured to control the sixth switch in a complementary manner with respect to the fifth switch.

Clause 33. The apparatus of any one of clauses 21-32, wherein, based on the third conversion mode, the controller is configured to generate a first PWM signal, a second PWM signal, and a third PWM signal for controlling the power converter to change a first voltage between the first terminal and the second terminal to a fourth voltage between the third terminal and the fourth terminal.

Clause 34. The apparatus of any one of clauses 21-33, wherein, based on the third conversion mode, the controller is configured to: control, using the first PWM signal, a first switch and a second switch of a first buck switching leg of a first buck converter of the plurality of buck converters to alternate between the conducting state and the non-conducting state; control, using the second PWM signal, a third switch and a fourth switch of a second buck switching leg of a second buck converter of the plurality of buck converters to alternate between the conducting state and the non-conducting state; control, using the third PWM signal, a fifth switch and a sixth switch of the boost switching leg to alternate between the conducting state and the non-conducting state.

Clause 35. The apparatus of any one of clauses 21-34, wherein, the phase of the second PWM signal is 180 degrees with respect to the first PWM signal, wherein a frequency of the third PWM signal is twice a frequency of the first PWM signal or of the second PWM signal

Clause 36. The apparatus of any one of clauses 21-35, wherein using the first PWM signal, the second PWM signal, and the third PWM signal, the controller is configured to control the sixth switch in a complementary manner to the first and third switches, and control the fifth switch in a complementary to the second and fourth switches.

Clause 37. The apparatus of any one of clauses 21-36, wherein, using the first PWM signal, the controller is further configured to control the second switch in a complementary manner with respect to the first switch, wherein, using the second PWM signal, the controller is further configured to control the fourth switch in a complementary manner with respect to the third switch, and wherein, using the third PWM signal, the controller is further configured to control the sixth switch in a complementary manner with respect to the fifth switch.

Clause 38. The apparatus of any one of clauses 21-37, wherein the controller is configured to control the sixth switch to transition from the non-conducting state to the conducting state such that a middle of an interval in which the sixth switch is in the conducting state, is at a middle of an interval in which both the first switch and the third switch are in the conducting state.

Clause 39. The apparatus of any one of clauses 21-38, where a first duty cycle of the first PWM signal and of second PWM signal is different from a second duty cycle of the third PWM signal.

Clause 40. The apparatus of any one of clauses 21-39, wherein based on the first operational mode, positive current or negative current flows through the coupled inductor.

Clause 41. The apparatus of any one of clauses 21-40, wherein the controller, operating in the second operational mode, is configured to control the power converter based on one of a fourth conversion mode, a fifth conversion mode or a sixth conversion mode.

Clause 42. The apparatus of any one of clauses 21-41, wherein the boost leg comprises a fifth switch and a sixth switch coupled at a third connection point, wherein the fifth switch is coupled between the third terminal and the third connection point, wherein the boost switching leg further comprises a diode coupled across the fifth switch, wherein an anode of the diode is coupled to the third connection point, and the cathode of the diode is coupled to the third terminal, wherein the diode restricts a negative current from flowing through the coupled inductor, and wherein in the fourth conversion mode, the fifth conversion mode or the sixth conversion mode, the controller is configured to control the fifth switch to be in a non-conducting state.

Clause 43. The apparatus of any one of clauses 21-42, wherein based on the fourth conversion mode, the controller is configured to generate a first PWM signal, and a second PWM signal for controlling the power converter to reduce a first voltage between the first terminal and the second terminal to a second voltage between the third terminal and the fourth terminal.

Clause 44. The apparatus of any one of clauses 21-43, wherein based on the fourth conversion mode, the controller is further configured to: control a sixth switch of the boost switching leg to be in the non-conducting state; control, using the first PWM signal, a first switch and a second switch of a first buck switching leg of a first buck converter of the plurality of buck converters to alternate between the conducting state and the non-conducting state; and control, using the second PWM signal, a third switch and a fourth switch of a second buck switching leg of a second buck converter of the plurality of buck converters to alternate between the conducting state and the non-conducting state.

Clause 45. The apparatus of any one of clauses 21-44, wherein, using the first PWM signal, the controller is further configured to control the second switch in a complementary manner with respect to the first switch, wherein, using the second PWM signal, the controller is further configured to control the fourth switch in a complementary manner with respect to the third switch.

Clause 46. The apparatus of any one of clauses 21-45, wherein, the second PWM signal is phase shifted by 180 degrees with respect to the first PWM signal.

Clause 47. The apparatus of any one of clauses 21-46, wherein based on the fifth conversion mode, the controller is configured generate a first PWM signal for controlling the power converter to increase a first voltage between the first terminal and the second terminal to a second voltage between the third terminal and the fourth terminal.

Clause 48. The apparatus of any one of clauses 21-47, wherein, based on the fifth conversion mode, the controller is further configured to: control, using the first PWM signal, a sixth switch of the boost leg to alternate between conducting state and the non-conducting state; control a first switch of a first buck switching leg of a first buck converter of the plurality of buck converters and the third switch of a second buck switching leg of a second buck converter of the plurality of buck converters to be in the conducting state; and control the second of a first buck switching leg of a first buck converter of the plurality of buck converters switch and the fourth switch of a second buck switching leg of a second buck converter of the plurality of buck converters to be in the non-conducting state.

Clause 49. The apparatus of any one of clauses 21-48, wherein based on the sixth conversion mode, the controller is configured to generate a first PWM signal, a second PWM signal, and a third PWM signal for controlling the power converter to change a first voltage between the first terminal and the second terminal to a second voltage between the third terminal and the fourth terminal.

Clause 50. The apparatus of any one of clauses 21-49, wherein based the sixth conversion mode, the controller is further configured to: control, using the first PWM signal, a first switch and a second switch of a first buck switching leg of a first buck converter of the plurality of buck converters to alternate between the conducting state and the non-conducting state; control, using the second PWM signal, the third switch and the fourth switch of a second buck switching leg of a second buck converter of the plurality of buck converters to alternate between the conducting state and the non-conducting state; and control, using a third PWM signal, a sixth switch of the boost leg to alternate between the conducting state and the non-conducting state.

Clause 51. The apparatus of any one of clauses 21-50, wherein the phase of the second PWM signal is out of phase with respect to the first PWM signal, and wherein the frequency of the third PWM signal is double the frequency of the first PWM signal and the second PWM signal.

Clause 52. The apparatus of any one of clauses 21-51, wherein using the first PWM signal, the second PWM signal and the third PWM signal, the controller is configured to control the sixth switch complementary to the first and third switches.

Clause 53. The apparatus of any one of clauses 21-52, wherein, using the first PWM signal and the third PWM signal, the controller is configured to control the first switch and the sixth switch to transition concurrently to the conducting state, and wherein, using the second PWM signal and the third PWM signal, the controller is configured to control, the third switch and the sixth switch to transition concurrently to the conducting state.

Clause 54. The apparatus of any one of clauses 21-53, wherein a first duty cycle of the first PWM signal and of second PWM signal is different from a second duty cycle of the third PWM signal.

Clause 55. The apparatus of any one of clauses 21-54, wherein, using the first PWM signal, the controller is further configured to control the second switch in a complementary manner with respect to the first switch, wherein, using the second PWM signal, the controller is further configured to control the fourth switch in a complementary manner with respect to the third switch.

Clause 56. The apparatus of any one of clauses 21-55, wherein the controller is configured transition from the first operational mode to the second operational mode based on a measurement of a level of a first electrical parameter being different from a first value.

Clause 57. The apparatus of any one of clauses 21-56, wherein the first electrical parameter is a current through the coupled inductor, wherein, the controller is configured transition from the first operational mode to the second operational mode based the current through the coupled inductor being below a first threshold.

Clause 58. The apparatus of any one of clauses 21-57, wherein the controller is configured transition from the second operational mode to the first operational mode based on a measurement of a level of a second electrical parameter.

Clause 59. The apparatus of any one of clauses 21-58, wherein the second electrical parameter is a ratio of a voltage between the first terminal and the second terminal, and a voltage between third terminal and the fourth terminal wherein, the controller is configured transition from the second operational mode to the first operational mode based the ration being equal to a value related to a duty cycle of PWM signals.

Clause 60. The apparatus of any one of clauses 21-59, wherein the second electrical parameter is a current through the first terminal, and wherein, the controller is configured transition from the second operational mode to the first operational mode based the level of the current through the first terminal being above a second threshold.

Clause 61. The apparatus of any one of clauses 21-60, wherein the controller is configured to control the power converter in one of a first control mode or a second control mode.

Clause 62. The apparatus of any one of clauses 21-61, wherein based on the first control mode, the controller is configured to control the first conversion leg, the second conversion leg and the third conversion leg based on a closed loop control model of a current through the coupled inductor.

Clause 63. The apparatus of any one of clauses 21-62, wherein the closed loop control model comprises one of: Proportional and Integral (PI) control loop; or a Proportional, Integral and Derivative (PID) closed loop.

Clause 64. The apparatus of any one of clauses 21-63, wherein based on the second control mode, the controller is configured to control the first conversion leg, the second conversion leg and the third conversion leg based on an open loop computational model of a current through the coupled inductor.

Clause 65. The apparatus of any one of clauses 21-64, wherein the controller is configured to transition from the first control mode to the second control mode based on a level of a third parameter being different from a third value.

Clause 66. The apparatus of any one of clauses 21-65, wherein the third parameter is a ratio of a voltage between the first terminal and the second terminal, and a voltage between third terminal and the fourth terminal, wherein, the controller is configured transition from the first control mode operational mode to the second operational mode based the ration being larger than a value related to a duty cycle of PWM signals.

Clause 67. The apparatus of any one of clauses 21-66, wherein the controller is configured to transition from the second control mode to the first control mode based on a level of a fourth parameter being different from a fourth value.

Clause 68. The apparatus of any one of clauses 21-67, wherein the fourth parameter is a ratio of a voltage between the first terminal and the second terminal, and a voltage between third terminal and the fourth terminal wherein, the controller is configured transition from the first control mode operational mode to the second operational mode based the ration being equal to a value related to a duty cycle of PWM signals.

Clause 69. The apparatus of any one of clauses 21-68, further comprising sensors configured to measure one some or all of a voltages level, a current level, a temperature level, and a frequency level, wherein the first sensor is configured to measure a first voltage level between a first terminal and a second terminal, and wherein the second sensor is configured to measure a second voltage level between a third terminal and a fourth terminal.

Clause 70. The apparatus of any one of clauses 21-69, wherein the first terminal and the second terminal are configured to be coupled to a power source.

Clause 71. The apparatus of any one of clauses 21-70, wherein the power source is a photovoltaic panel.

Clause 72. The apparatus of any one of clauses 21-71, wherein a first polarity of the first winding is opposite a second polarity of the second winding.

Clause 73. The apparatus of any one of clauses 21-72, wherein the power converter comprises: a first buck converter comprising a first buck switching leg, the first buck switching leg comprises a first switch and a second switch coupled at a first connection point; a second buck converter comprising a second buck switching leg, the second buck switching leg comprises a third switch and a fourth switch coupled at a second connection point, wherein the boost switching leg comprises a fifth switch and a sixth switch coupled at a third connection point, wherein the coupled inductor comprises: a first winding; and a second winding, wherein the first winding and the second winding are wound around the common core, where the first winding is coupled between the first connection point and the third connection point, and wherein the second winding is coupled between the second connection point and the third connection point.

Clause 74. The apparatus of any one of clauses 21-73, wherein the controller is configured to control the second switch to transition between the conducting and the non-conducting states in a complementary manner with respect to the first switch, wherein the controller is configured to control the fourth switch transition between the conducting and the non-conducting states in a complementary manner with respect to the third switch, wherein the controller control is configured to control the sixth switch transition between the conducting and the non-conducting states in a complementary manner with respect to the fifth switch.

Clause 75. The apparatus of any one of clauses 21-74, wherein the controller is further configured to control the second switch to transition from the non-conducting state to the conducting state, a first determined time-period after the first switch transitions from the conducting state to the non-conducting state, and wherein the controller is further configured to control the second switch to transition from the conducting state to the non-conducting state, a second determined time-period after the first switch transitions from the non-conducting state to the conducting state.

Clause 76. The apparatus of any one of clauses 21-75, wherein the controller is further configured to control the fourth switch to transition from the non-conducting state to the conducting state, a third determined time-period after the third switch transitions from the conducting state to the non-conducting state, and wherein the controller is further configured to control the fourth switch to transition from the conducting state to the non-conducting state, a fourth determined time-period after the third switch transitions from the non-conducting state to the conducting state.

Clause 77. The apparatus of any one of clauses 21-76, wherein the controller is further configured to control the sixth switch to transition from the non-conducting state to the conducting state, a fifth determined time-period after the fifth switch transitions from the conducting state to the non-conducting state, and wherein the controller is further configured to control the sixth switch to transition from the conducting state to the non-conducting state, a sixth determined time-period after the fifth switch transitions from the non-conducting state to the conducting state.

Clause 78. The apparatus of any one of clauses 21-77, wherein each winding of the windings of the coupled inductor corresponds to a respective buck converter of the plurality of buck converters.

Clause 79. The apparatus of any one of clauses 21-78, wherein the controller is configured to generate a plurality of PWM signals for controlling the plurality of buck converters, wherein a PWM signal of the plurality of PWM signals is determined as a reference PWM signal, wherein a phase shift between the reference PWM signal and each remaining one of the plurality of PWM signals is correspondingly determined by:

$$\Delta\phi_i = i * \frac{360}{N} \ for \ i \in \{1, 2, ...,$$

*N* - 1}, wherein N is the number of the plurality of buck legs.

Clause 80A. A method comprising: determining, by a controller of the power converter, if the power converter is in a first operational mode or a second operational mode.

Clause 80B. The method of clause 80A, the method further comprising: based on the power converter operating in the first operational mode, measuring a first electrical parameter of the power converter; based on the power converter operating in the second operational mode, measuring a second electrical parameter of the power converter; based on the level of the first electrical parameter being different from a first predetermined value, transitioning the power converter, by the controller, to the second operational mode; and based on the level of the second electrical parameter being different from a second predetermined value, transitioning the power converter, by the controller, to the first operational mode, wherein, the second operational mode comprises turning a switch in the power converter to a non-conducting state, wherein the switch is coupled across a diode, and wherein the diode restricts a reverse current from flowing through the power converter. Reference to clause 80 herein may refer to one or each of clause 80A and clause 80B.

Clause 81. The method of clause 80, wherein the power converter comprises: a plurality of buck converters, wherein each buck converter of the plurality of buck converters comprises: a buck switching leg; and the shared coupled inductor; and a boost converter coupled between a third terminal and a fourth terminal, the boost converter comprising: a boost switching leg; and the shared coupled inductor.

Clause 82. The method of any one of clauses 80-81, wherein the first operational mode comprises controlling, by the controller, the power converter based on one of a first conversion mode, a second conversion mode, or a third conversion mode.

Clause 83. The method of any one of clauses 80-82, wherein the method further comprises: generating, based on the first conversion mode, a first PWM signal and a second PWM signal, and controlling the power converter to reduce a first voltage between a first terminal and a second terminal to a second voltage between a third terminal and a fourth terminal.

Clause 84. The method of any one of clauses 80-83, further comprises, based on the first conversion mode: controlling, using the fist PWM signal, a first switch and a second switch of a first buck switching leg of a first buck converter of the plurality of buck converters to alternate between the conducting state and the non-conducting state; controlling, using the second PWM signal, a third switch and a fourth switch of a first buck switching leg of a first buck converter of the plurality of buck converters to alternate between the conducting state and the non-conducting state; and controlling the fifth switch of the boost switching leg to be in the conducting state; controlling a sixth switch of the boost switching leg to be in the non-conducting state, wherein, the second PWM signal is phase shifted by 180 degrees with respect to the first PWM signal.

Clause 85. The method of any one of clauses 80-84, further comprises controlling the second switch in a complementary manner with respect to the first switch, and controlling the fourth switch in a complementary manner with respect to the third switch.

Clause 86. The method of any one of clauses 80-85, further comprising generating by the controller, based on the second conversion mode, a first PWM signal for controlling the power converter to increase a first voltage between the first terminal and the second terminal to a third voltage between the third terminal and the fourth terminal.

Clause 87. The method of any one of clauses 80-86, further comprises based on the second conversion mode: controlling a first switch and a third switch of a first buck switching leg of a first buck converter of the plurality of buck converters to be in the conducting state; controlling a second switch and the fourth switch of a second buck switching leg of a second buck converter of the plurality of buck converters to be in the non-conducting state; and controlling, using the first PWM signal, a fifth switch and a sixth switch of the boost switching leg to alternate between conducting state and the non-conducting state.

Clause 88. The method of any one of clauses 80-87, further comprising controlling the sixth switch in a complementary manner with respect to the fifth switch.

Clause 89. The method of any one of clauses 80-88, further comprising generating, based on the third conversion mode, a first PWM signal, a second PWM signal, and a third PWM signal for controlling the power converter to change a first voltage between the first terminal and the second terminal to a fourth voltage between the third terminal and the fourth terminal.

Clause 90. The method of any one of clauses 80-89, further comprising, based on the third conversion mode: controlling, using the first PWM signal, a first switch and a second switch of a first buck switching leg of a first buck converter of the plurality of buck converters to alternate between the conducting state and the non-conducting state; controlling, using the second PWM signal, a third switch and a fourth switch of a second buck switching leg of a second buck converter of the plurality of buck converters to alternate between the conducting state and the non-conducting state; controlling, using the third PWM signal, a fifth switch and a sixth switch of the boost switching leg to alternate between the conducting state and the non-conducting state; and wherein, the phase of the second PWM signal is 180 degrees with respect to the first PWM signal, wherein a frequency of the third PWM signal is twice a frequency of the first PWM signal or of the second PWM signal.

Clause 91. The method of any one of clauses 80-90, further comprises controlling the sixth switch in a complementary manner to the first and third switches, and control the fifth switch in a complementary to the second and fourth switches.

Clause 92. The method of any one of clauses 80-91, further comprises: controlling, using the first PWM signal, the second switch in a complementary manner with respect to the first switch; controlling, using the second PWM signal, the fourth switch in a complementary manner with respect to the third switch; and controlling, using the third PWM signal, the sixth switch in a complementary manner with respect to the fifth switch.

Clause 93. The method of any one of clauses 80-92, further comprises controlling the sixth switch to transition from the non-conducting state to the conducting state such that a middle of an interval in which the sixth switch is in the conducting state, is at a middle of an interval in which both the first switch and the third switch are in the conducting state.

Clause 94. The method of any one of clauses 80-93, where a first duty cycle of the first PWM signal and of second PWM signal is different from a second duty cycle of the third PWM signal.

Clause 95. The method of any one of clauses 80-94, wherein based on the first operational mode, positive current or negative current flows through the coupled inductor.

Clause 96. The method of any one of clauses 80-95, wherein the second operational mode comprises controlling, by the controller, the power converter based on one of a fourth conversion mode, a fifth conversion mode, or a sixth conversion mode.

Clause 97. The method of any one of clauses 80-96, further comprising generating, based on the fourth conversion mode, a first PWM signal and a second PWM signal for controlling the power converter to reduce a first voltage between the first terminal and the second terminal to a second voltage between the third terminal and the fourth terminal.

Clause 98. The method of any one of clauses 80-97, further comprising, based on the fourth conversion mode: controlling a sixth switch of the boost switching leg to be in the non-conducting state; controlling, using the first PWM signal, a first switch and a second switch of a first buck switching leg of a first buck converter of the plurality of buck converters to alternate between the conducting state and the non-conducting state; and controlling, using the second PWM signal, a third switch and a fourth switch of a second buck switching leg of a second buck converter of the plurality of buck converters to alternate between the conducting state and the non-conducting state, wherein, the second PWM signal is phase shifted by 180 degrees with respect to the first PWM signal.

Clause 99. The method of any one of clauses 80-98, wherein, using the first PWM signal, the controller is further configured to control the second switch in a complementary manner with respect to the first switch, wherein, using the second PWM signal, the controller is further configured to control the fourth switch in a complementary manner with respect to the third switch.

Clause 100. The method of any one of clauses 80-99, further comprising generating, based on the fifth conversion mode, a first PWM signal for controlling the power converter to increase a first voltage between the first terminal and the second terminal to a second voltage between the third terminal and the fourth terminal.

Clause 101. The method of any one of clauses 80-100, further comprising, based on the fifth conversion mode: controlling, using the first PWM signal, a sixth switch of the boost leg to alternate between conducting state and the non-conducting state; controlling a first switch of a first buck switching leg of a first buck converter of the plurality of buck converters and the third switch of a second buck switching leg of a second buck converter of the plurality of buck converters to be in the conducting state; and controlling a second switch of a first buck switching leg of a first buck converter of the plurality of buck converters switch and a fourth switch of a second buck switching leg of a second buck converter of the plurality of buck converters to be in the non-conducting state.

Clause 102. The method of any one of clauses 80-101, further comprising generating, based on the sixth conversion mode, a first PWM signal, a second PWM signal, and a third PWM signal for controlling the power converter to change a first voltage between the first terminal and the second terminal to a second voltage between the third terminal and the fourth terminal.

Clause 103. The method of any one of clauses 80-102, further comprising, based the sixth conversion mode: controlling, using the first PWM signal, a first switch and a second switch of a first buck switching leg of a first buck converter of the plurality of buck converters to alternate between the conducting state and the non-conducting state; controlling, using the second PWM signal, the third switch and the fourth switch of a second buck switching leg of a second buck converter of the plurality of buck converters to alternate between the conducting state and the non-conducting state; and controlling, using a third PWM signal, a sixth switch of the boost leg to alternate between the conducting state and the non-conducting state; wherein, the phase of the second PWM signal is out of phase with respect to the first PWM signal, and wherein the frequency of the third PWM signal is double the frequency of the first PWM signal and the second PWM signal.

Clause 104. The method of any one of clauses 80-103, further comprises controlling, using the first PWM signal, the second PWM signal and the third PWM signal, the sixth switch complementary to the first and third switches.

Clause 105. The method of any one of clauses 80-104, further comprising controlling, using the first PWM signal and the third PWM signal, the first switch and the sixth switch to transition concurrently to the conducting state, and controlling, using the second PWM signal and the third PWM signal, the third switch and the sixth switch to transition concurrently to the conducting state.

Clause 106. The method of any one of clauses 80-105, wherein a first duty cycle of the first PWM signal and of second PWM signal is different from a second duty cycle of the third PWM signal.

Clause 107. The method of any one of clauses 80-106, wherein, using the first PWM signal, the controller is further configured to control the second switch in a complementary manner with respect to the first switch, wherein, using the second PWM signal, the controller is further configured to control the fourth switch in a complementary manner with respect to the third switch.

Clause 108. The method of any one of clauses 80-107, further comprising the steps of: determining, by a controller of the power converter, if the power converter is in a first control mode or a second control mode; based on the power converter operating in the first control mode, measuring a third electrical parameter of the power converter; based on the power converter operating in the second control mode, measuring a fourth electrical parameter of the power converter; based on the level of the third electrical parameter being different from a third predetermined value, transitioning the power converter, by the controller, to the second operational mode; and based on the level of the fourth electrical parameter being different from a fourth predetermined value, transitioning the power converter, by the controller, to the first operational mode.

Clause 109. The method of any one of clauses 80-108, further comprising controlling, based on the first control mode, the first leg, the second leg and the third leg based on a closed loop control model of the current in through the coupled inductor.

Clause 110. The method of any one of clauses 80-109, further comprising controlling, based on the second control mode, the controller the first leg, the second leg and the third leg based on an open loop control model of the current in through the coupled inductor.

Clause 111. The method of any one of clauses 80-110, wherein the third and fourth parameters comprise a ratio between a first voltage level and a second voltage level and the first value a ratio between value relating to a duty cycle.

Clause 112A. A device comprising: a power converter comprising a coupled inductor.

Clause 112B. The device of clause 112A, the device further comprising: one of more sensors; and a controller, electronically coupled to the power converter and the sensor, wherein the controller is configured to: determine whether the power converter is operating in a first operational mode or in a second operational mode; detect, based on one or more measurements from the one or more sensors, and based on the power converter operating in the first operational mode, a level of a first electrical parameter of the power converter; transition the power converter to the second operational mode based on level of the first electrical parameter being different from a first determined value; detect, based on one or more measurements from the one or more sensors, and based on the power converter operating in the second operational mode, a level of a second electrical parameter of the power converter; transition the power converter to the first operational mode based on level of the second electrical parameter being different from a second determined value; wherein, the second operational mode comprises turning a switch in the power converter to a non-conducting state, wherein the switch is coupled across a diode, and wherein the diode restricts a negative current from flowing through the coupled inductor. Reference to clause 112 herein may refer to one or each of clause 112A and clause 112B.

Clause 113. The apparatus of clause 112, wherein the one or more sensors comprise a current sensor and wherein the first electrical comprise a current level through the coupled inductor.

Clause 114. The apparatus of any one of clauses 112-113, wherein the one or more sensors comprise a first voltage sensor for measuring a level of a first voltage between a first terminal and a second terminal, and a second voltage sensor for measuring a level of a second voltage between a third terminal and a fourth terminal.

Clause 115. The apparatus of any one of clauses 112-114, wherein the controller is configured to determine a ratio between the level of the second voltage and the level of the fist voltage.

Clause 116. An apparatus comprising: a circuit comprising: a first switching leg comprising a first switch and a second switch coupled at a first connection point, wherein the first switching leg is coupled between a first terminal and a second terminal; a second switching leg comprising a third switch and a fourth switch coupled at a second connection point, wherein the second switching leg is coupled between the first terminal and the second terminal; a third switching leg, comprising a fifth switch and a sixth switch coupled at a third connection point, wherein the third switching leg is coupled between a third terminal and a fourth terminal; a coupled inductor comprising: a first winding; and a second winding, wherein the first winding is coupled between the first connection point and the third connection point, and wherein the second winding is coupled between the second connection point and the third connection point; a controller configured to the circuit to convert power for the first terminal and the second terminal to the third terminal and the fourth terminal.

Clause 117. An apparatus comprising: a power converter comprising: a first switching leg comprising a first switch and a second switch coupled at a first connection point, wherein the first switching leg is coupled between a first terminal and a second terminal; a second switching leg comprising a third switch and a fourth switch coupled at a second connection point, wherein the second switching leg is coupled between a third terminal and a fourth terminal; an inductor comprising a winding, wherein the winding is coupled between the first connection point and the second connection point.

Clause 118. The apparatus of clause 117, the apparatus further comprising a controller coupled to the power converter, wherein the controller is configured control the power converter to convert power from the first terminal and the second terminal to the third terminal and the fourth terminal based on one of a first operational mode and a second operational mode.

Clause 119. The apparatus of any one of clauses 117-118, wherein the controller, operating in the first operational mode, is configured to control the power converter based on one of a first conversion mode, a second conversion mode, or a third conversion mode.

Clause 120. The apparatus of any one of clauses 117-119, wherein, based on the first conversion mode, the controller is configured to generate a first PWM for controlling the power converter to reduce a first voltage between the first terminal and the second terminal to a second voltage between the third terminal and the fourth terminal.

Clause 121. The apparatus of any one of clauses 117-120, wherein, based on the first conversion mode, the controller is configured to: control, using the first PWM signal, the first switch and the second switch to alternate between the conducting state and the non-conducting state; control the third switching in the conducting state; and control a fourth switch be in the non-conducting state.

Clause 122. The apparatus of any one of clauses 117-121, wherein, based on the second conversion mode, the controller is configured to generate a first PWM signal for controlling the power converter to increase a first voltage between the first terminal and the second terminal to a third voltage between the third terminal and the fourth terminal.

Clause 123. The apparatus of any one of clauses 117-122, wherein based on the second conversion mode, the controller is configured to: control the first switch to be in the conducting state; control the second to be in the non-conducting state; and control, using the first PWM signal, the third switch and the fourth switch to alternate between conducting state and the non-conducting state.

Clause 124. The apparatus of any one of clauses 117-123, wherein, based on the third conversion mode, the controller is configured to generate a first PWM signal and a second PWM signal, for controlling the power converter to change a first voltage between the first terminal and the second terminal to a fourth voltage between the third terminal and the fourth terminal.

Clause 125. The apparatus of any one of clauses 117-124, wherein, based on the third conversion mode, the controller is configured to: control, using the first PWM signal, the first switch and the second switch to alternate between the conducting state and the non-conducting state; control, using the second PWM signal, the third switch and the fourth switch to alternate between the conducting state and the non-conducting state.

Clause 126. The apparatus of any one of clauses 117-125, wherein the controller, operating in the second operational mode, is configured to control the power converter based on one of a fourth conversion mode, a fifth conversion mode or a sixth conversion mode.

Clause 127. The apparatus of any one of clauses 117-126, wherein the second switching leg further comprises a diode coupled across the fifth switch, wherein an anode of the diode is coupled to the third connection point, and the cathode of the diode is coupled to the third terminal, wherein the diode restricts a negative current from flowing through the coupled inductor, and wherein in the fourth conversion mode, the fifth conversion mode or the sixth conversion mode, the controller is configured to control the fifth switch to be in a non-conducting state.

Clause 128. The apparatus of any one of clauses 117-127, wherein based on the fourth conversion mode, the controller is configured to generate a first PWM signal for controlling the power converter to reduce a first voltage between the first terminal and the second terminal to a second voltage between the third terminal and the fourth terminal.

Clause 129. The apparatus of any one of clauses 117-128, wherein based on the fourth conversion mode, the controller is further configured to: control the fourth switch of the boost switching leg to be in the non-conducting state; control, using the first PWM signal, the first switch and the second switch to alternate between the conducting state and the non-conducting state.

Clause 130. The apparatus of any one of clauses 117-129, wherein based on the fifth conversion mode, the controller is configured generate a first PWM signal for controlling the power converter to increase a first voltage between the first terminal and the second terminal to a second voltage between the third terminal and the fourth terminal.

Clause 131. The apparatus of any one of clauses 117-130, wherein, based on the fifth conversion mode, the controller is further configured to: control, using the first PWM signal, fourth switch to alternate between conducting state and the non-conducting state control the first switch to be in the conducting state; and control the second switch to be in the non-conducting state.

Clause 132. The apparatus of any one of clauses 117-131, wherein based on the sixth conversion mode, the controller is configured to generate a first PWM signal, a second PWM signal, and a third PWM signal for controlling the power converter to change a first voltage between the first terminal and the second terminal to a second voltage between the third terminal and the fourth terminal.

Clause 133. The apparatus of any one of clauses 117-132, wherein based the sixth conversion mode, the controller is further configured to: control, using the first PWM signal, the first switch and the second to alternate between the conducting state and the non-conducting state; and control, using the second PWM signal, the fourth switch to alternate between the conducting state and the non-conducting state.

Clause 134. An apparatus comprising: a power converter comprising: a shared coupled inductor having windings around a common core; a plurality of boost converters coupled between a first terminal and a second terminal, each boost converter of the plurality of buck converters comprising: a boost switching leg; and the shared coupled inductor; a buck converter coupled between a third terminal and a fourth terminal, the boost converter comprising: a buck switching leg; and the shared coupled inductor.

Clause 135. An apparatus comprising: a power converter comprising: buck switches; boost switches; one or more inductors coupled between the buck switches and the boost switches; a controller; wherein one or more switches of the boost switches comprises a corresponding diode, wherein when the one or more switches are in a non-conducting state, the corresponding diodes restricts a negative current from flowing through the coupled inductor, and wherein, in an operational mode, the controller is configured to control the one or more switches to be in a non-conducting state.

One or more aspects of the disclosure may be embodied in computer-usable data and computer-executable instructions, such as in one or more program modules, executed by one or more computers or other devices. Generally, program modules include routines, programs, objects, components, data structures, etc. that perform particular tasks or implement particular abstract data types when executed by a processor in a computer or other device. The computer executable instructions may be stored on a computer readable medium such as a hard disk, optical disk, removable storage media, solid state memory, RAM, etc. As will be appreciated by one of skill in the art, the functionality of the program modules may be combined or distributed as desired in various embodiments. In addition, the functionality may be embodied in whole or in part in firmware or hardware equivalents such as integrated circuits, field programmable gate arrays (FPGA), and the like. Particular data structures may be used to more effectively implement one or more aspects of the disclosure, and such data structures are contemplated within the scope of computer executable instructions and computer-usable data described herein.

Although the subject matter has been described in language specific to structural features and/or methodological acts, it is to be understood that the subject matter defined in the appended claims is not necessarily limited to the specific features or acts described above. Rather, the specific features and acts described above are disclosed as example forms of implementing the claims.

**Claims**

1. An apparatus comprising:
   a power converter comprising:

   a shared coupled inductor having windings around a common core;
   a plurality of buck converters coupled between a first terminal and a second terminal, wherein the plurality of buck converters comprises:

   a plurality of buck switching legs, and
   the shared coupled inductor; and

   a boost converter coupled between a third terminal and a fourth terminal, the boost converter comprising:

   a boost switching leg, and
   the shared coupled inductor.

2. The apparatus of claim 1, further comprising a controller configured to control the power converter to convert power from the first terminal and the second terminal to the third terminal and the fourth terminal, using one of a first conversion mode, a second conversion mode or a third conversion mode.

3. The apparatus of claim 2, wherein the boost switching leg comprises a first switch and a second switch coupled at a first connection point,

   wherein the first switch is coupled between the third terminal and the first connection point,
   wherein the boost switching leg further comprises a diode coupled across the first switch,
   wherein an anode of the diode is coupled to the first connection point, and a cathode of the diode is coupled to the third terminal,
   wherein the diode restricts a negative current from flowing through the shared coupled inductor, and

wherein in the first conversion mode, the second conversion mode or the third conversion mode, the controller is configured to control the first switch to be in a non-conducting state.

4. The apparatus of claim 3, wherein based on the first conversion mode, the controller is configured to generate a first PWM signal, and a second PWM signal for controlling the power converter to reduce a first voltage between the first terminal and the second terminal to a second voltage between the third terminal and the fourth terminal.

5. The apparatus of claim 4, wherein based on the first conversion mode, the controller is further configured to:

control the second switch of the boost switching leg to be in a non-conducting state;
control, using the first PWM signal, a third switch and a fourth switch of a first buck switching leg of a first buck converter of the plurality of buck converters to alternate between a conducting state and a non-conducting state; and
control, using the second PWM signal, a fifth switch and a sixth switch of a second buck switching leg of a second buck converter of the plurality of buck converters to alternate between the conducting state and the non-conducting state.

6. The apparatus of claim 3, wherein based on the second conversion mode, the controller is configured generate a first PWM signal for controlling the power converter to increase a first voltage between the first terminal and the second terminal to a second voltage between the third terminal and the fourth terminal.

7. The apparatus of claim 6, wherein based on the second conversion mode, the controller is further configured to:

control, using the first PWM signal, a second switch of the boost switching leg to alternate between a conducting state and the non-conducting state;
control a third switch of a first buck switching leg of a first buck converter of the plurality of buck converters and a fifth switch of a second buck switching leg of a second buck converter of the plurality of buck converters to be in the conducting state; and
control a fourth switch of the first buck switching leg of the first buck converter of the plurality of buck converters and a sixth switch of a second buck switching leg of a second buck converter of the plurality of buck converters to be in the non-conducting state.

8. The apparatus of claim 3, wherein based on the third conversion mode, the controller is configured to generate a first PWM signal, a second PWM signal, and a third PWM signal for controlling the power converter to change a first voltage between the first terminal and the second terminal to a second voltage between the third terminal and the fourth terminal.

9. The apparatus of claim 8, wherein based the third conversion mode, the controller is further configured to:

control, using the first PWM signal, a third switch and a fourth switch of a first buck switching leg of a first buck converter of the plurality of buck converters to alternate between a conducting state and a non-conducting state;
control, using the second PWM signal, a fifth switch and a sixth switch of a second buck switching leg of a second buck converter of the plurality of buck converters to alternate between a conducting state and a non-conducting state; and
control, using a third PWM signal, a second switch of the boost switching leg to alternate between a conducting state and a non-conducting state.

10. The apparatus of claim 9, wherein the second PWM signal is out of phase with respect to the first PWM signal, and wherein a frequency of the third PWM signal is double a frequency of the first PWM signal and the second PWM signal.

11. The apparatus of any one of claims 8-10, wherein, using the first PWM signal and the third PWM signal, the controller is configured to control the first switch and the sixth switch to transition concurrently to a conducting state, and wherein, using the second PWM signal and the third PWM signal, the controller is configured to control, the third switch and the sixth switch to transition concurrently to a conducting state.

12. The apparatus of any one of claims 8-11, wherein a first duty cycle of the first PWM signal and the second PWM signal is different from a second duty cycle of the third PWM signal.

**13.** The apparatus of any one of claims 1-12, wherein the controller is configured to control the power converter in one of:

a closed loop control mode or an open loop control mode based on a closed loop control model of a current through the coupled inductor; or
an open loop control mode based on an open loop computational model of a current through the shared coupled inductor.

**14.** The apparatus of any one of claims 1-13, wherein each winding of the windings of the shared coupled inductor corresponds to a respective buck converter of the plurality of buck converters.

**15.** A method comprising:

determining, by a controller of the power converter, if the power converter is in a first operational mode or a second operational mode;
based on the power converter operating in the first operational mode, measuring a first electrical parameter of the power converter;
based on the power converter operating in the second operational mode, measuring a second electrical parameter of the power converter;
based on a level of the first electrical parameter being different from a first predetermined value, transitioning the power converter, by the controller, to the second operational mode; and
based on a level of the second electrical parameter being different from a second predetermined value, transitioning the power converter, by the controller, to the first operational mode,
wherein, the second operational mode comprises turning a switch in the power converter to a non-conducting state,
wherein the switch is coupled across a diode, and
wherein the diode restricts a reverse current from flowing through the power converter.

100

| 1ST BUCK LEG |
102-1

| 2ND BUCK LEG |
102-2

| NTH BUCK LEG |
102-N

| SHARED COUPLED INDUCTOR |
104

103

| BOOST LEG |

BOOST CONVERTER
111

N BUCK CONVERTERS

107

FIG. 1A

FIG. 1B

Fig. 1C

FIG. 2A

FIG. 2B

FIG. 3

FIG. 4

FIG. 5A

HS-1

500

LS-1

502

HS-2

504

LS-2

506

HS-5

507

LS-5

508

I_L

510

FIG. 5B

FIG. 6A

FIG. 6B

FIG. 6C

FIG. 7

800

| BUCK SWITCHES | INDUCTOR(S) | BOOST SWITCHES |
|---|---|---|

802          804          803

# FIG. 8A

FIG. 8B

DETERMINE AN OPERATIONAL MODE OF A POWER CONVERTER

900

POWER CONVERTER IN
CCM     $1^{ST}$ OPERATIONAL MODE (CCM) OR     SCCM
$2^{ND}$ OPERATIONAL MODE (SCCM)?

902

MEASURE, BY A SENSOR, A LEVEL OF A FIRST ELECTRICAL PARAMETER OF THE A POWER CONVERTER

904

MEASURE, BY A SENSOR, A LEVEL OF A SECOND ELECTRICAL PARAMETER OF THE A POWER CONVERTER

906

NO     $1^{ST}$ ELECTRICAL PARAMETER ≠ A $1^{ST}$ DETERMINED VALUE

908

$2_{ND}$ ELECTRICAL PARAMETER ≠ $2^{ND}$ DETERMINED VALUE     NO

910

YES

TRANSITION TO THE SCCM OPERATIONAL MODE

912

YES

TRANSITION TO THE CCM OPERATIONAL MODE

914

FIG. 9A

$I\_L > I_{th1}$

$I\_L < I_{th1}$

$M > F(D)$

CCM

SCCM

920

922

$M = F(D)$

## FIG. 9B

$I\_L < I_{th1}$

$I\_L > I_{th1}$

$Iin < I_{th2}$

CCM

SCCM

920'

922'

$Iin > I_{th2}$

## FIG. 9C

DETERMINE A CONTROL MODE OF A POWER CONVERTER

1000

POWER CONVERTER IN
1$^{ST}$ CONTROL MODE (CL) OR
2$^{ND}$ CONTROL MODE (OL)?

CL

OL

1002

MEASURE, BY A SENSOR, A LEVEL OF A FIRST ELECTRICAL PARAMETER OF THE A POWER CONVERTER

1004

MEASURE, BY A SENSOR, A LEVEL OF A SECOND ELECTRICAL PARAMETER OF THE A POWER CONVERTER

1006

1$^{ST}$ ELECTRICAL PARAMETER $\neq$ A 1$^{ST}$ DETERMINED VALUE

NO

1008

2$_{ND}$ ELECTRICAL PARAMETER $\neq$ 2$^{ND}$ DETERMINED VALUE

NO

1010

YES

YES

TRANSITION TO THE OPEN LOOP CONTROL MODE

1012

TRANSITION TO THE CLOSED LOOP CONTROL MODE

1014

FIG. 10A

FIG. 10B

1100

BOOST LEG

1103-2

BUCK LEG

1102

SHARED COUPLED INDUCTOR

1104

BOOST LEG

1103-2

BUCK CONVERTER

1107

BOOST LEG

1103-N

N - BOOST CONVERTER

1111

# FIG. 11

Fig. 12A

Fig. 12B

Fig. 13

Fig. 14A

Fig. 14B

Fig. 15

Europäisches
Patentamt

European
Patent Office

Office européen
des brevets

# EUROPEAN SEARCH REPORT

**Application Number**

EP 24 18 0456

## DOCUMENTS CONSIDERED TO BE RELEVANT

| Category | Citation of document with indication, where appropriate, of relevant passages | Relevant to claim | CLASSIFICATION OF THE APPLICATION (IPC) |
|---|---|---|---|
| X | WO 2020/068969 A1 (GEN ELECTRIC [US]) 2 April 2020 (2020-04-02) | 1,13,14 | INV. H02M3/158 |
| Y | * figures 1-3 * | 2-12 | |
| A | * paragraph [0040] * | 15 | |
| | ----- | | |
| X | CN 109 951 081 A (JIANGSU COLLEGE ENG & TECHNOLOGY) 28 June 2019 (2019-06-28) | 1 | |
| Y | * figure 2 * * paragraph [0015] * * paragraph [0025] - paragraph [0032] * | 10 | |
| | ----- | | |
| X | . .: "LTC3780 High Efficiency, Synchronous, 4-Switch Buck-Boost Controller", , 28 February 2019 (2019-02-28), pages 1-30, XP093215680, Retrieved from the Internet: URL:https://www.analog.com/media/en/techni cal-documentation/data-sheets/LTC3780.pdf | 15 | |
| Y | * figures 2-3 * * figure 6 * * page 1 * * page 10 * * page 15 * * page 20 * | 2-12 | TECHNICAL FIELDS SEARCHED (IPC) H02M |
| | ----- | | |

The present search report has been drawn up for all claims

| Place of search | Date of completion of the search | Examiner |
|---|---|---|
| The Hague | 17 October 2024 | Riehl, Philippe |

CATEGORY OF CITED DOCUMENTS

X : particularly relevant if taken alone
Y : particularly relevant if combined with another document of the same category
A : technological background
O : non-written disclosure
P : intermediate document

T : theory or principle underlying the invention
E : earlier patent document, but published on, or after the filing date
D : document cited in the application
L : document cited for other reasons

.........................................................................................

& : member of the same patent family, corresponding document

EPO FORM 1503 03.82 (P04C01)

## ANNEX TO THE EUROPEAN SEARCH REPORT
## ON EUROPEAN PATENT APPLICATION NO.

EP 24 18 0456

This annex lists the patent family members relating to the patent documents cited in the above-mentioned European search report.
The members are as contained in the European Patent Office EDP file on
The European Patent Office is in no way liable for these particulars which are merely given for the purpose of information.

17-10-2024

| Patent document cited in search report | | Publication date | Patent family member(s) | | Publication date |
|---|---|---|---|---|---|
| WO 2020068969 | A1 | 02-04-2020 | EP | 3857693 A1 | 04-08-2021 |
| | | | US | 10574144 B1 | 25-02-2020 |
| | | | WO | 2020068969 A1 | 02-04-2020 |
| CN 109951081 | A | 28-06-2019 | NONE | | |

EPO FORM P0459

For more details about this annex : see Official Journal of the European Patent Office, No. 12/82

**EP 4 475 418 A1**

## REFERENCES CITED IN THE DESCRIPTION

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- US 63506625

- US 63624917